# EUROPEAN PATENT SPECIFICATION

(11) **EP 0 542 898 B1**
(45) Date of publication and mention of the grant of the patent: **15.10.1997**
(21) Application number: 91915869.1
(22) Date of filing: 01.08.1991
(51) Int. Cl.: C08L 25/04, C08L 67/00, C09D 11/10

(54) **POLYMER BLENDS OF POLYESTERS AND POLYSTYRENE FOR AQUEOUS INKS**
POLYMERMISCHUNGEN AUS POLYESTER UND POLYSTYROL FÜR WÄSSERIGEN TINTEN
MELANGES POLYMERES DE POLYESTERS ET DE POLYSTYRENE POUR ENCRES AQUEUSES

(30) Priority: 06.08.1990 US 563373
(43) Date of publication of application: 26.05.1993
(73) Proprietor: EASTMAN CHEMICAL COMPANY, Kingsport, TN 37660 (US)
(72) Inventor: CASSELL, Michael, Lynn, 343 State St. Rochester, N.Y. 14650-2201 (US); Jenkins, Waylon Lewellyn, 343 State St. Rochester, N.Y. 14650-2201 (US); Raynolds, Peter Webb, 343 State St. Rochester, N.Y. 14650-2201 (US)
(74) Representative: Behrens, Dieter, Dr.-Ing.
(86) International application number: US9105453
(87) International publication number: WO9202583

(56) References cited:
- WO-A-90/01048
- US-A- 3 734 874
- US-A- 4 335 220
- US-A- 4 704 309

## Description

### Field of Invention

The present invention concerns polymer blends of a polyester or polyesteramide and a styrene polymer as well as a process for preparation thereof. These polymer blends impart improved properties, such as block resistance, gloss and/or water resistance, to aqueous inks.

### Background of the Invention

There is much interest in water-dispersibie polymers for inks because of problems associated with solvent emissions from solvent-based inks.

Certain polyesters are water-dispersible as a result of sulfonate groups on the polyester backbone. These polyesters have been described in, for example, U.S. Patents 3,734,874, 3,546,008, and 3,779,993.

Water-dispersible polyesters have been used in textile sizes and have been used to develop aqueous inks. Inks containing a water-dissipatable polyester are well known in the art as disclosed in U.S. Patents 4,704,309 and 4,738,785. These inks have many desirable features, including excellent gloss and color development, good rewet characteristics, and low odor. However, because of the wide range of printing conditions and substrates used in the printing industry, a given ink formulation can have ideal properties for some applications and poor properties for other applications. Water resistance and block resistance are properties that are highly desirable for many ink applications.

WO 90/01048, published on February 8, 1990, describes an acrylic latex which optionally can be styrenated and which is mixed with a water-dissipatable polyester.

It would be highly desirable to have a material that imparts good water resistance, gloss, and/or block resistance to films prepared from aqueous polyester dispersions while maintaining the other advantages associated with the use of the water-dissipatable polyester.

### Summary of the Invention

The present invention is directed to a polymer blend having a monomodal particle size distribution obtainable by polymerizing in aqueous dispersion one or more monomers wherein said monomers comprise 30 to 100 weight % of at least one styrene monomer (B)(a) and up to 70 weight % of at least (meth)acrylate monomer (B)(b) in the presence of a dispersion of polyester or polyesteramide and wherein said polymer blend is comprising:
(A) 5 to 75 weight % of a water-dispersible sulfonate group-containing polyester or polyesteramide,
(B) 25 to 95 weight % of a polymer from said monomers.

The present invention is also directed to a method of preparing a water-dispersed polymer blend of claim 1 comprising the steps of:
(i) preparing an aqueous polymerization mixture by contacting
   (A) a water-dispersible sulfonate group-containing polyester or polyesteramide,
   (B) one or more monomers, wherein said monomers comprise:
      (a) 30 to 100 weight % of a styrene monomer, and
      (b) up to 70 weight % of repeating units from a (meth)acrylate compound,
   (C) a polymerization initiator, and
   (D) water,
(ii) polymerizing said monomers to provide said water-dispersible polymer blend.

The present invention is further directed to an ink composition comprising 5 to 60 weight % of
(I) a polymer blend comprising:
   (A) 5 to 75 weight % of a water-dispersible sulfonate group-containing polyester or polyesteramide,
   (B) 25 to 95 weight % of a styrene polymer comprising:
      (a) about 30 to 100 weight % of repeating units from a styrene compound, and
      (b) up to 70 weight % of at least one (meth)acrylate monomer.
(II) 0 to 30 weight % of a pigment material,
(III) 40 to 90 weight % of water, and
(IV) 0 to 20 weight % of an alcohol.

Preferred embodiments of the invention are described in the dependent claims.

### Brief Description of the Drawings

Figure 1 - particle size distribution of a polystyrene latex mixed with a water-dispersible polyester.

Figure 2 - particle size distribution of polystyrene polymerized in the presence of a water-dispersible polyester.

### Detailed Description of the Invention

A preferred polymer blend of the invention is wherein component (A) is present in an amount of 15 to 50 weight %, component (B) is present in an amount of about 50 to 85 weight %; and component (B) comprises 50 to 100 weight % of component (B) (a) and 0 to 50 weight % of component (B) (b).

A more preferred polymer blend of the invention is wherein component (A) is present in an amount of 20 to 40 weight %, component (B) is present in an amount of 60 to 80 weight %; and component (B) comprises 70 to 100 weight % of component (B)(a) and 0 to 30 weight % of component (B)(b).

Of course, the preferred embodiments described herein for the polymer blend are also applicable to the process for preparing the blends, the dispersions and ink compositions of the invention.

The polyesters used in this invention are water-dispersible as a result of sulfonate groups on the polyester backbone and the use of diethylene glycol as part or all of the glycol portion of the polyester. suitable compositions are those described in U.S. Patents 3,734,874, 3,546,008, 4,335,220 and 3,779,993. Basically, these polyesters and polyesteramides are described as having carbonyloxy interconnecting groups in the linear molecular structure wherein up to 80% thereof may be carbonylamido linking groups, the polymer having an inherent viscosity of at least 0.1, and the polymer consisting essentially of the following components or ester forming or ester-amide forming derivatives thereof;
(a) at least one difunctional dicarboxylic acid;
(b) from 2 to 25 mole %, based on a total of all acid, hydroxyl and amino equivalents being equal to 200 mole %, of at least one difunctional sulfomonomer containing at least one metal sulfonate group attached to an aromatic nucleus wherein the functional groups are hydroxy, carboxyl or amino; and
(c) at least one glycol or a mixture of a glycol and a diamine having two -NRH groups, the glycol containing two -CH₂-OH groups.

Dispersibility is related to the weight % of poly(ethylene glycol) and mole % of sulfomonomer. Therefore, if the content of either is relatively low, the other should be relatively high to maintain dispersibility.

The polymer may contain at least one difunctional reactant selected from a hydroxycarboxylic acid having one -CH₂-OH, an aminocarboxylic acid having one -NRH group, an aminoalcohol having one -CR₂-OH group and one -NRH or mixtures thereof, wherein each R is an H atom or an alkyl group of 1 to 4 carbon atoms.

The dicarboxylic acid component of the polyester or polyesteramide comprises aliphatic dicarboxylic acids, alicyclic dicarboxylic acids, aromatic dicarboxylic acids, or mixtures of two or more of these acids. Examples of such dicarboxylic acids include succinic; glutaric; adipic; azelaic; sebacic; itaconic; 1,4-cyclohexanedicarboxylic; phthalic; terephthalic and isophthalic. If terephthalic acid is used as the carboxylic acid component of the polyester, superior results are achieved when at least 5 mole % of one of the other acids is also used.

It should be understood that use of the corresponding acid anhydrides, esters, and acid chlorides of these acids is included in the term "dicarboxylic acid."

Other suitable acids are disclosed in U.S. Patent 3,774,993.

The difunctional sulfo-monomer component of the polyester or polyesteramide may advantageously be a dicarboxylic acid or an ester thereof containing a metal sulfonate group or a glycol containing a metal sulfonate group or a hydroxy acid containing metal sulfonate group. The metal ion of the sulfonate salt may be Na⁺, Li⁺, K⁺ and the like. When a monovalent alkali metal ion is used, the resulting polyesters or polyesteramides are less readily dissipated by cold water and more readily dissipated by hot water. When a divalent or a trivalent metal ion is used, the resulting polyesters or polyesteramides are not ordinarily easily dissipated by cold water but are more readily dissipated in hot water. It is possible to prepare the polyester or polyesteramide using, for example, as sodium sulfonate salt and later by ion-exchange replace this ion with a different ion, and thus alter the characteristics of the polymer. The difunctional monomer component may also be referred to as a difunctional sulfomonomer and is further described hereinbelow.

Advantageous difunctional sulfo-monomer components are those wherein the sulfonate salt group is attached to an aromatic acid nucleus such as benzene, naphthalene, diphenyl, oxydiphenyl, sulfonyldiphenyl or methylenediphenyl nucleus. Preferred results are obtained through the use of sulfophthalic acid, sulfoterephthalic acid, sulfoisophthalic acid, 4-sulfonaphthalene-2,7-dicarboxylic acid, and their esters; metallosulfoaryl sulfonate as described in U.S. Patent 3,779,993.

Particularly superior results are achieved when the difunctional sulfo-monomer components is 5-sodiosulfoisophthalic acid or its esters and the glycol is a mixture of ethylene glycol or 1,4-cyclohexanedimethanol with diethylene glycol.

When the sulfonate-containing difunctional monomer is an acid or its ester, the polyester or polyesteramide should contain at least 8 mole % of said monomer based on total acid content, with more than 10 mole % given particularly advantageous results. Total acid content is calculated as the sum of (i) moles of component (a) namely dicarboxylic acids, (2) one-half of the moles of carboxyl-containing compounds of component (d), (3) moles of component (c) which are dicarboxylic acids, and (4) one-half of the moles of component (c) which are monocarboxy-containing compounds.

In the preferred form of the present invention, at least part of the glycol component contains repeating units of a poly(ethylene glycol) of the formula H(̵OCH₂-CH₂)̵ₙ-OH wherein n is an integer of 2 to 500. The values of n and the mole % of poly(ethylene glycol) in the polyester, if used, are adjusted such that the mole % of poly(ethylene glycol) within the stated range is inversely proportional to the quantity of n within the stated ranges. Thus, when the mole % is high, the value of n is low. On the other hand, if the mole % is low, the value of n is high. It is apparent, therefore, that the weight % (product of mole % and molecular weight) of the poly(ethylene glycol) is an important consideration because the water dissipatability of the copolyester decreases as the weight % poly(ethylene glycol) in the copolyester decreases. For example, if the weight % of poly(ethylene glycol) is too low, the water dissipatability of the copolyester may be inadequate. Furthermore, the weight % of poly(ethylene glycol) is preferably adjusted such that it is inversely proportional to the mole % of the difunctional sulfomonomer because the water dissipatability of the copolyester is a function of both the mole % sulfomonomer and the weight % polyethylene glycol.

Examples of suitable poly(ethylene glycols) include relatively high molecular weight polyethylene glycols, some of which are available commercially under the designation "Carbowax" (trademark), a product of Union Carbide. Diethylene glycol is also especially suitable.

Other useful glycols for preparing copolyesters may consist of aliphatic, alicyclic, and aralkyl glycols. Examples of these glycols include ethylene glycol; propylene glycol; 1,3-propanediol; 2,4-dimethyl-2-ethylhexane-1,3-diol; 2,2-dimethyl-1,3-propanediol; 2-ethyl-2-butyl-1,3-propanediol; 2-ethyl-2-isobutyl-1,3-propanediol; 1,3-butanediol, 1,4-butanediol; 1,5-pentanediol; 1,6-hexanediol; 2,2,4-trimethyl-1,6-hexanediol; thiodiethanol; 1,2-cyclohexanedimethanol; 1,3-cyclohexanedimethanol; 1,4-cyclohexanedimethanol; 2,2,4,4-tetramethyl-1,3-cyclobutanediol; p-xylylenediol.

Useful polyesters include those wherein the sulfomonomer is a dicarboxylic acid and constitutes 8 to 50 mole %, preferably 10 to 50 mole % based on the sum of (1) the moles of the total dicarboxylic acid content of components (a) and (b), and (2) one-half of the moles of any hydroxycarboxylic acid.

Other useful polyesters include those wherein the sulfomonomer is a glycol and constitutes 8 mole % to 50 mole % based on the sum of the total glycol content measured in moles of (b) and (c), and one-half of the moles of any hydroxycarboxylic acid. Thus, a preferred polyester or polyesteramide useful herein comprises a polymer blend wherein said water-dispersible polyester or polyesteramide comprises a polymer having carbonyloxy linking groups in the linear molecular structure wherein up to 80% of the linking groups are carbonylamido linking groups, the polymer having an inherent viscosity of from 0.1 to 1.0 measured in a 60/40 parts by weight solution of phenol/tetrachloroethane at 25°C and at a concentration of 0.5 gram of polymer in 100 mL of the solvent, the polymer containing substantially equimolar proportions of acid equivalents (100 mole %) to hydroxy and amino equivalents (100 mole %), the polymer comprising the reaction products of reactants selected from (a), (b), (c), and (d), or the ester forming or esteramide forming derivatives thereof, as follows, wherein all stated mole percentages are based on the total of all acid, hydroxyl, and amino equivalents being equal to 200 mole %:
(a) at least one difunctional dicarboxylic acid;
(b) from 4 to 25 mole % of at least one difunctional sulfomonomer containing at least one metallic sulfonate group or nitrogen-containing nonmetallic sulfonate group attached to an aromatic or cycloaliphatic nucleus wherein the functional groups are hydroxy, carboxyl, or amino;
(c) at least one difunctional reactant selected from a glycol or a mixture of a glycol and diamine having two -NRH groups, the glycol containing two -CH₂-OH groups of which
   (1) at least 15 mole % is a poly(ethylene glycol) having the structural formula

      H(̵OCH₂-CH₂)̵ₙOH,

      n being an integer of from 2 to 20, or
   (2) of which from about 0.1 to less than 15 mole % is a poly(ethylene glycol) having the structural formula

      H(̵OCH₂-CH₂)̵ₙOH,

      n being an integer of between 2 and 500, and with the proviso that the mole % of said poly(ethylene glycol) within said range is inversely proportional to the quantity of n within said range; and
(d) from none to 40 mole % of difunctional reactant selected from hydroxycarboxylic acids having one -C(R)₂-OH group, aminocarboxylic acids having one -NRH group, amino-alcohols having one -C(R)₂-OH group and one -NRH group, or mixtures of said difunctional reactants;
wherein each R in the (c) and (d) reactants is a hydrogen atom or an alkyl group of 1 to 4 carbons.

More preferably the polyester has an inherent viscosity of from 0.28 to 0.38, an acid moiety of from 75 to 84 mole % isophthalic acid and conversely from 25 to 16 mole % 5-sodiosulfoisophthalic acid, and a glycol moiety of from 45 to 60 mole % diethylene glycol and conversely from 55 to 40 mole % 1,4-cyclohexanedimethanol or ethylene glycol or mixtures thereof.

Most preferably the polyester comprises an acid moiety comprising from 80 to 83 mole % isophthalic acid and conversely from 20 to 17 mole % 5-sodiosulfoisophthalic acid, and said glycol moiety comprises from 52 to 56 mole % diethylene glycol and conversely from 48 to 44 mole % 1,4-cyclohexanedimethanol.

The styrene monomer useful herein is preferably of the structure 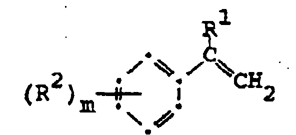 wherein R¹ is H or methyl, R² is a lower alkyl group of 1 to 6 carbon atoms, and m is an integer of 0 to 2. Preferably m is 0 or 1, and R² is methyl.

The most preferable styrene monomers are styrene, α-methyl styrene, 4-methyl styrene, 3-methyl styrene, t-butyl styrene, and mixtures thereof.

The meth(acrylate) monomer useful herein preferably is of the structure 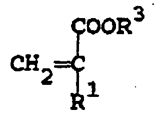 wherein R³ is H or an alkyl group of 1 to 10 carbon atoms, optionally substituted with one or two substituents selected from the group consisting of C₁-C₆ alkoxy, hydroxy, epoxy, acetoacetoxy and halogen, and R¹ has the same meaning as previously defined.

Most preferably the (meth)acrylate monomer is selected from the group consisting of butyl acrylate, ethyl acrylate, propyl acrylate, 2-ethylhexyl acrylate, methyl methacrylate, hydroxyethyl methacrylate, glycidyl (meth)acrylate, acetoacetoxyethyl methacrylate, and mixtures thereof.

In the process of the present invention the monomers are polymerized in the presence of the sulfonate-group containing polymer (i.e., the polyester or polyesteramide).

In the method of the present invention the polymer blends of the present invention are prepared in aqueous dispersions. The monomers are generally added to an aqueous dispersion of the water-dispersible polyester and polymerized by free radical initiation in conventional emulsion or suspension polymerization processes. The preferred ratio of polyester to monomer will vary widely and depends on the intended application for the blend.

The polymerization can be initiated by a water-soluble free radical initiator known in the art such as sodium or potassium persulfate or by an oil-soluble initiator such as AIBN or benzoyl peroxide. Other useful initiators include redox initiators such as sodium persulfate/sodium metabisulfite and sodium formaldehyde sulfoxylate/Fe/hydrogen peroxide.

A typical temperature range for the polymerization reaction is 20°C to 90°C with 50°C to 80°C being preferred.

The sulfonate-group containing polymers which are used in the present invention typically become very viscous at concentrations above 34% total solids. Thus, the reaction typically is begun with a polyester or polyesteramide dispersion that is 30% total solids or less. However, the dispersions are prepared at final total solids levels up to 20% to 60%. A total solids content of 35% to 50% is preferred. The increase in solids level is achieved during polymerization by controlling the amount of water, if any, which is added along with the monomer. Thus, the method of the present invention for preparing water-dispersed polymer blends can be described as comprising the steps of:
(i) preparing an aqueous polymerization mixture by contacting
   (A) a water-dispersible sulfonate qroup-containing polyester or polyesteramide,
   (B) one or more monomers,
   (C) a polymerization initiator, and
   (D) water,
   wherein said monomers comprise:
   (a) 30 to 100 weight % of a styrene monomer, and, optionally,
   (b) up to 70 weight % of a (meth)-acrylate monomer, and
(ii) polymerizing said monomers to provide said water-dispersible polymer blend.

In the polymerization method it is preferred that component (A) is present in an amount of 1 to 45 weight %, component (B) is present in an amount of 5 to 57 weight %, component (C) is present in an amount of 0.01 to 2 weight %, and component (D) is present in an amount of 40 to 80 weight %.

It is also preferred that the polymerization mixture contain up to 20 weight % of a C₁ to C₄ alcohol, especially propanol. Lesser amounts of the alcohol (e.g., up to 5 or 10 weight %) can be employed. It has been found that use of the alcohol results in unexpected advantages in the polymerization reaction, especially achieving smaller particle size. It is anticipated that smaller particle size leads to improved dispersion stability and possibly improved film-forming properties. In the polymerization method of the invention, more preferred is wherein component (A) is present in an amount of 3 to 30 weight %, component (B) is present in an amount of 10 to 51 weight %, component (C) is present in an amount of 0.03 to 0.5 weight %, component (D) is present in an amount of 40 to 80 weight %, and the alcohol is present in an amount of up to 10 weight %. Even more preferred is wherein component (A) is present in an amount of 7 to 20 weight %, component (B) is present in an amount of 21 to 40 weight %, component (C) is present in an amount of 0.05 to 0.2 weight %, component (D) is present in an amount of 50 to 65 weight %, and the alcohol is present in an amount of up to 5 weight %.

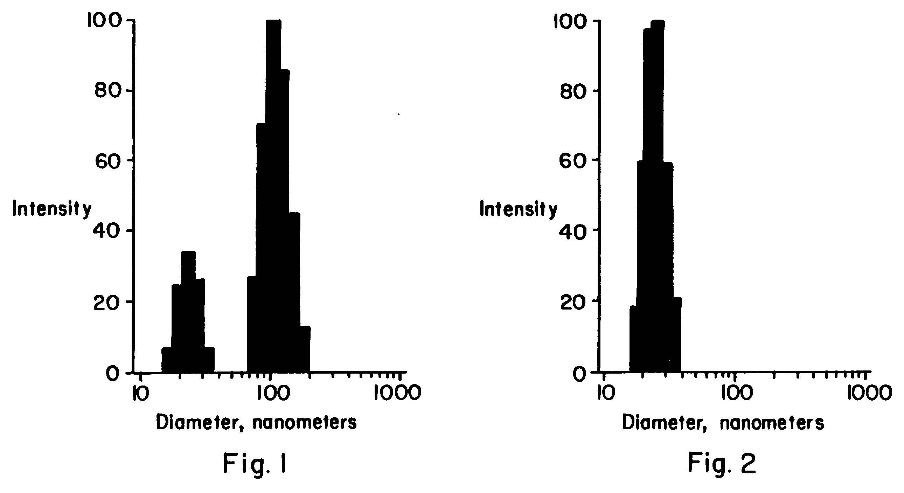

The method of the present invention produces polymer blends which are significantly different than mere physical mixing of two preformed polymers. For example, the blends produced by the invention method have monodisperse or monomodal particle size distributions (see Figures 1 and 2). The particle size distribution of the blends produced by the method of the invention preferably has an average particle size diameter of 40 to 300 nanometers (nm).

In a preferred embodiment, the sulfonate group-containing polymer is prepared, generally by melt polymerization, and an aqueous dispersion containing from 10% to 30% total solids is prepared from the polyester or polyesteramide directly. A mixture of one or more monomers and the polymerization initiators may then be added to the aqueous dispersion of the polyester or polyesteramide and polymerization initiated to produce an aqueous dispersion. The aqueous dispersion so produced can be prepared with total solids contents from 20% to 60%. Preferably, the pH is, or is adjusted to be, within the range of about 4-8 in order to minimize hydrolysis of the polyester.

The present invention is also directed to an ink composition containing the polymer blend of the invention which comprises 5 to 60 weight % of
(I) a polymer blend comprising:
   (A) 5 to 75 weight % of a water-dispersible sulfonate group-containing polyester or polyesteramide,
   (B) 25 to 95 weight % of a styrene polymer comprising:
      (a) 30 to 100 weight % of repeating units from a styrene compound, and, optionally,
      (b) up to 70 weight % of repeating units from a (meth)acrylate compound,
(II) up to 30 weight % of a pigment material,
(III) 40 to 90 weight % of water, and
(IV) up to 20 weight % of an alcohol.
The ink composition optionally contains up to 10 weight %, preferably up to 3 weight %, of at least one additional additive such as surfactants, antifoams, biocides, waxes, transfer agents, and coalescence aids. The alcohol of the ink composition is preferably a C₁ to C₄ alcohol such as methanol, ethanol, or propanol.

In the ink composition it is preferred that component (I) comprises 15 to 50 weight % of component (I)(A) and 50 to 85 weight % of component (I)(B); and component (I)(B) comprises 50 to 100 weight % of component (I)(B)(a) and 0 to 50 weight % of component (I)(B)(b). More preferred is wherein component (I) comprises 20 to 40 weight % of component (I)(A) and 60 to 80 weight % of component (I)(B); and component (I)(B) comprises 70 to 100 weight % of component (I)(B)(a) and 0 to 30 weight % of component (I)(B)(b).

Exemplary useful C.I. pigments for use in the present invention are given in the following table:

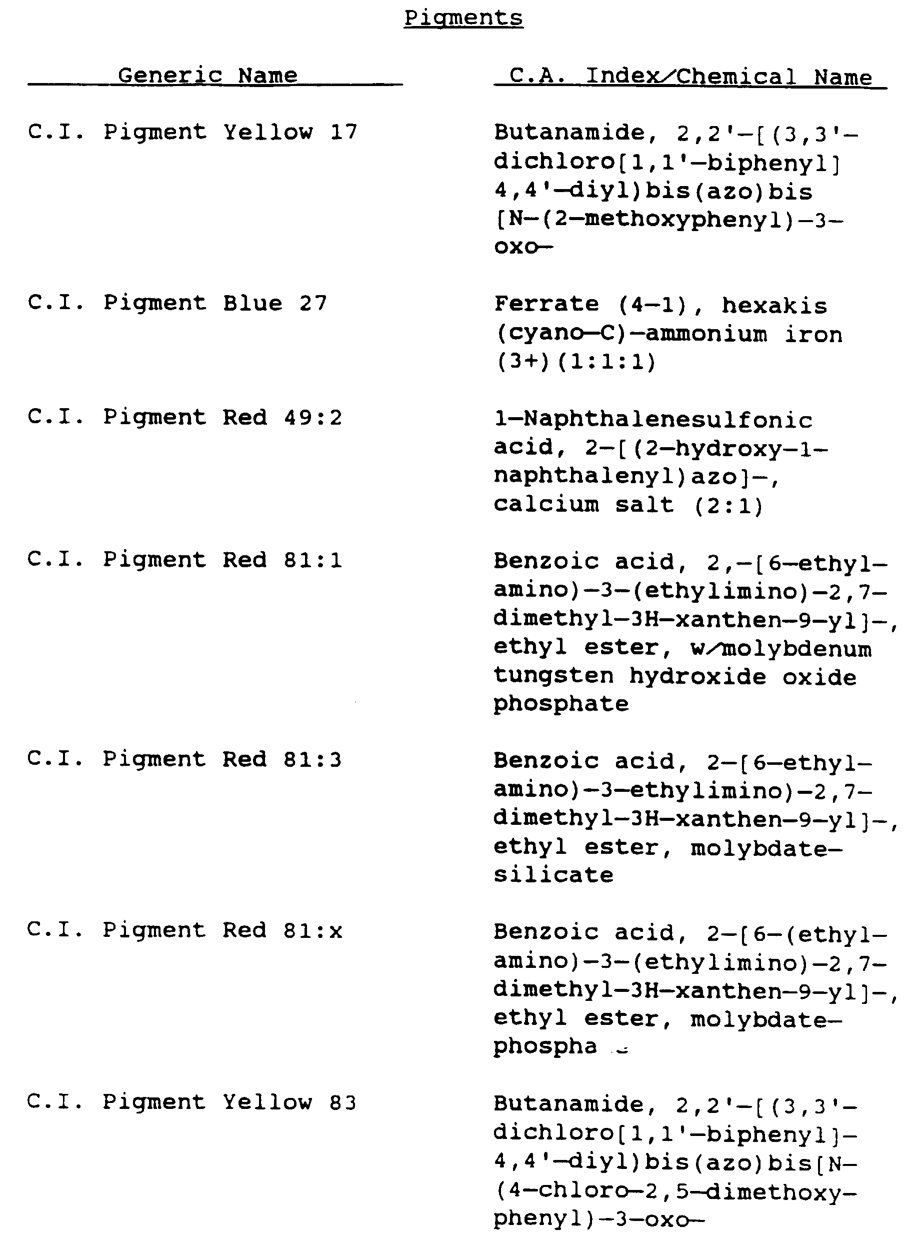

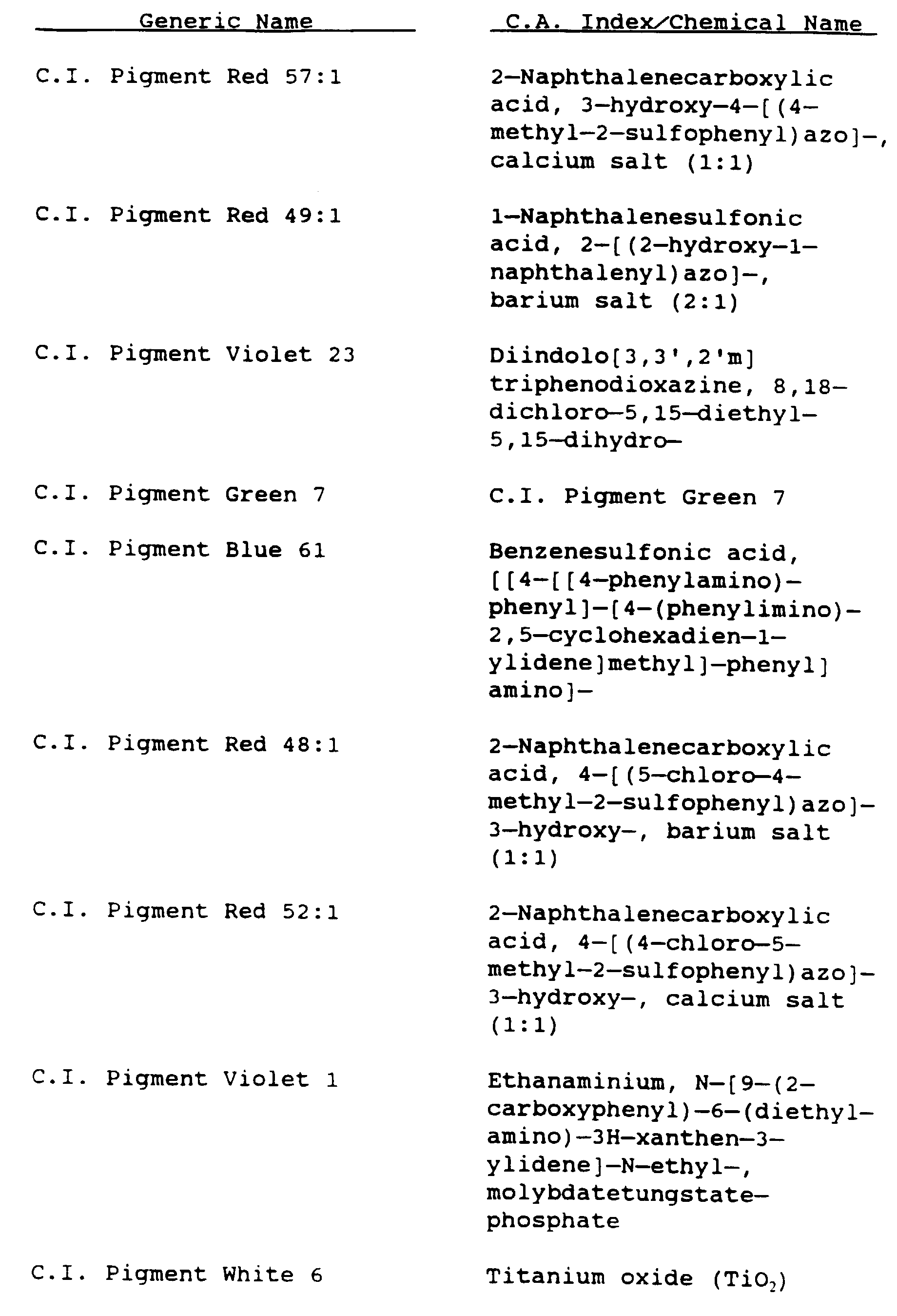

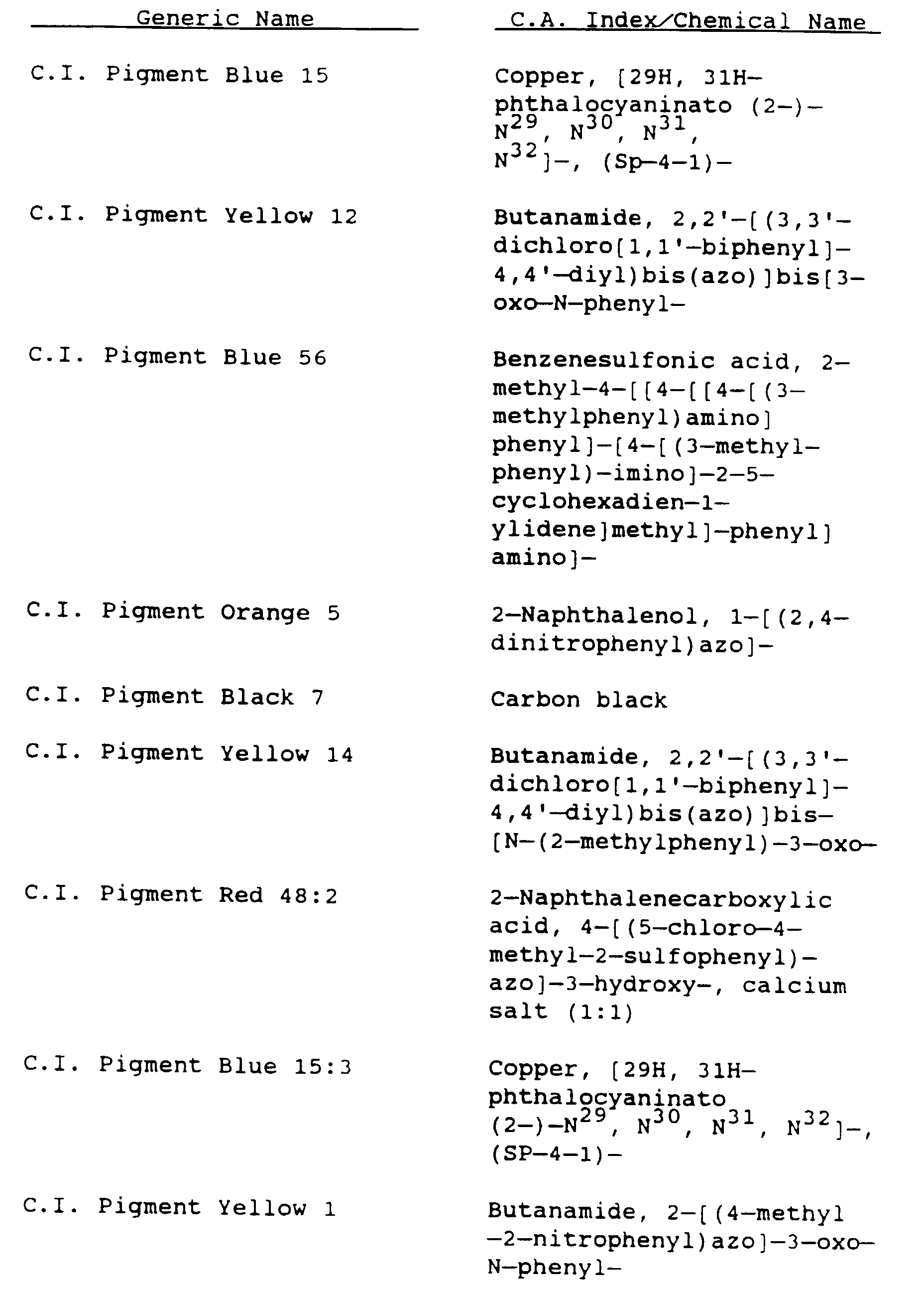

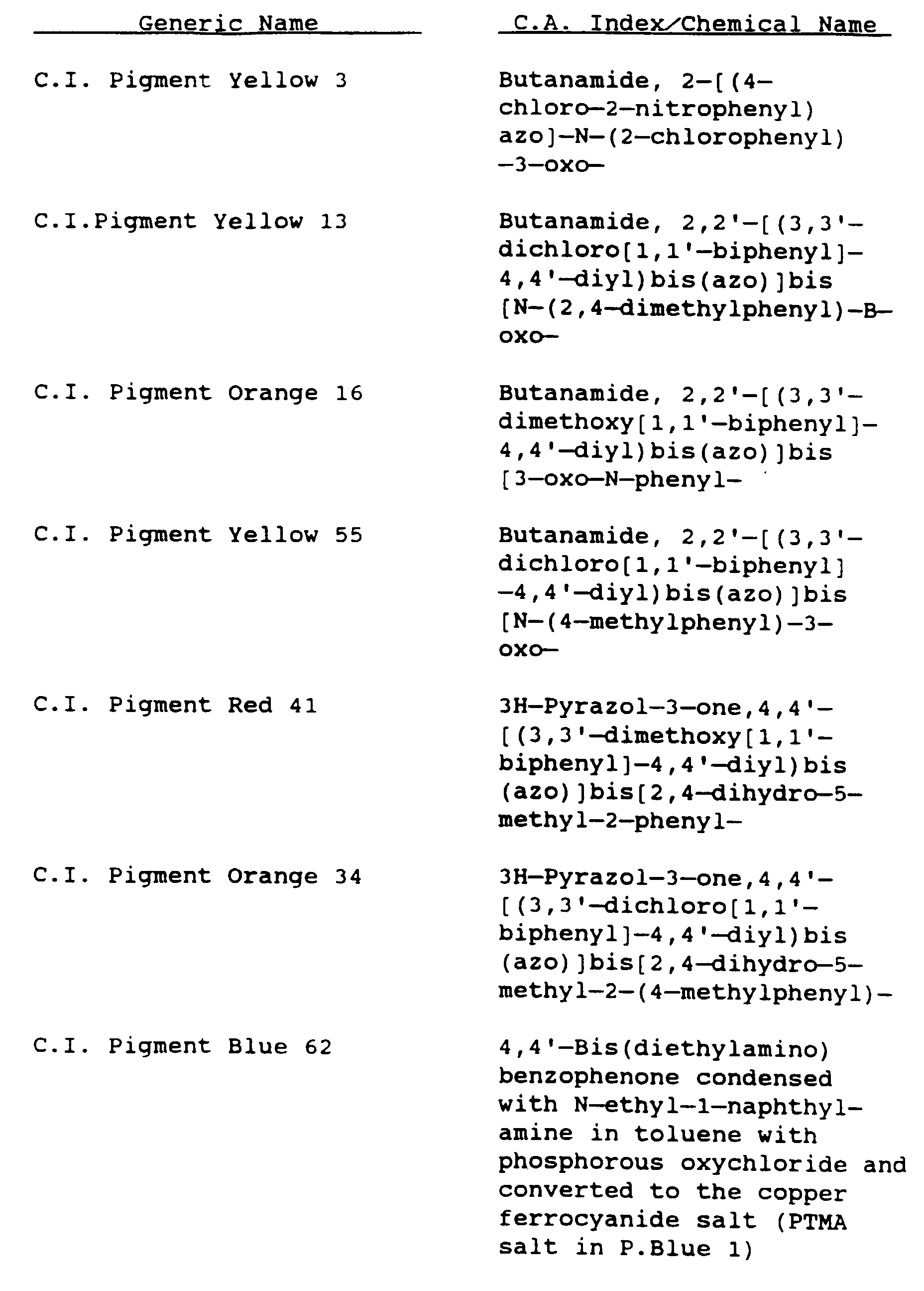

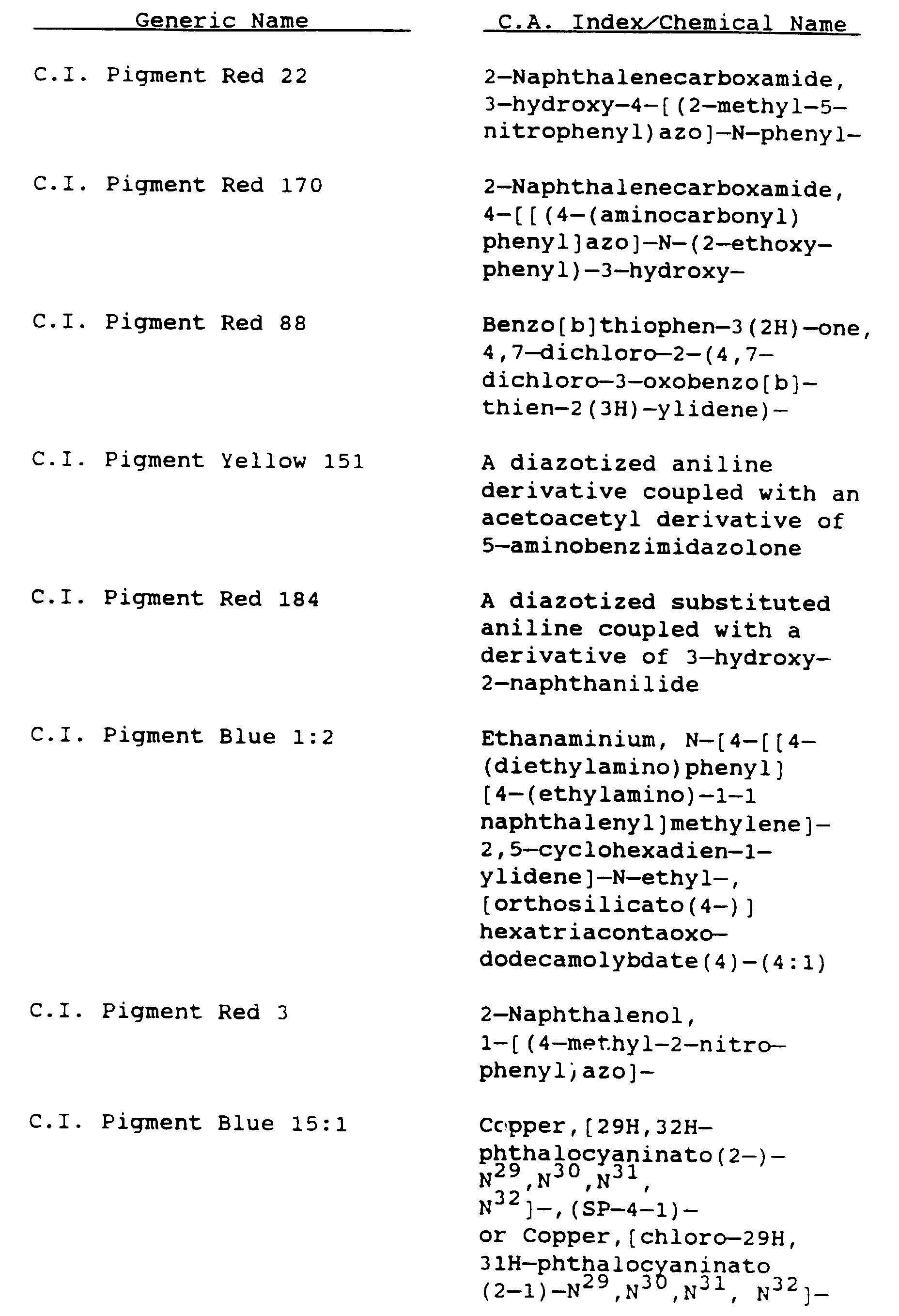

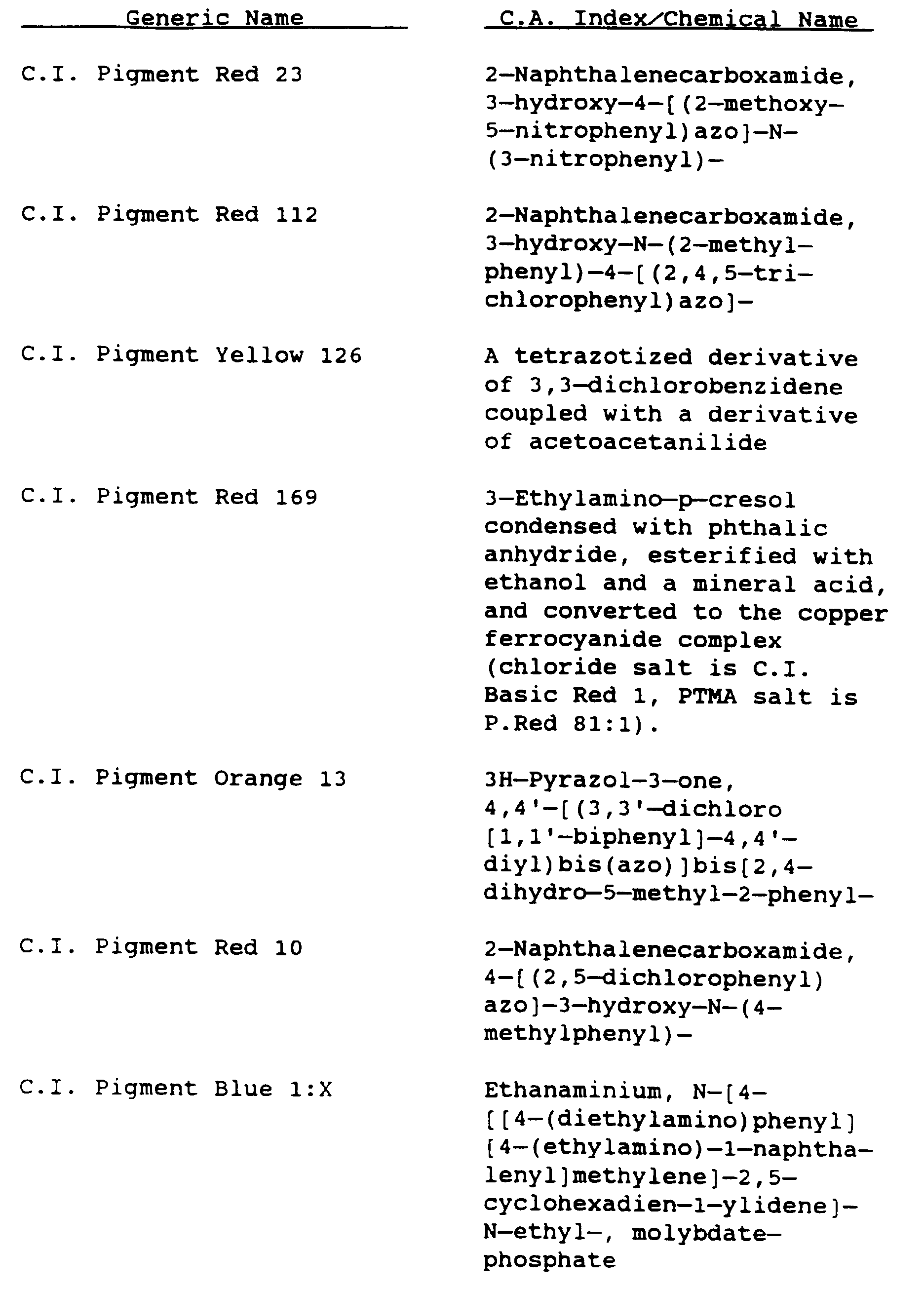

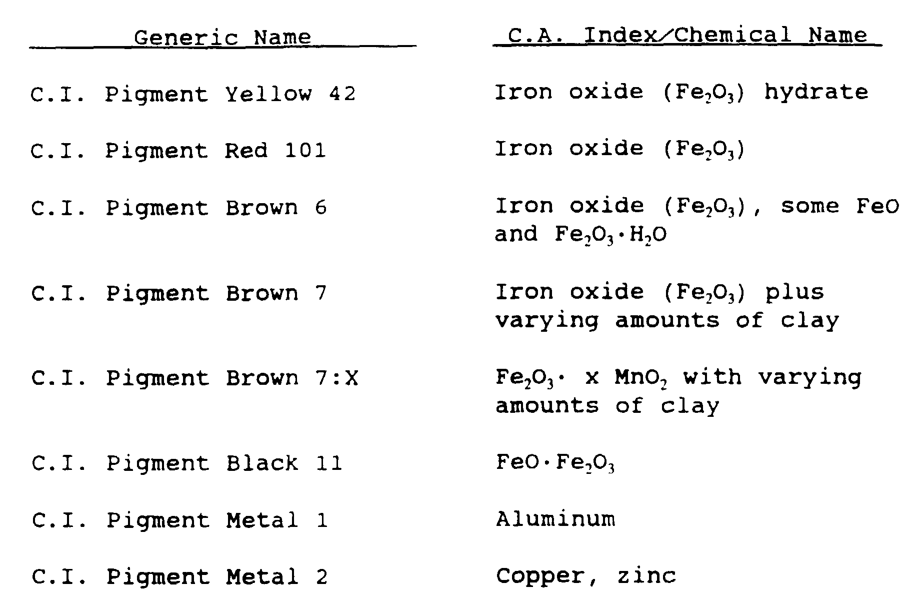

This invention can be further illustrated by the following examples of preferred embodiments thereof, although it will be understood that these examples are included merely for purposes of illustration and are not intended to limit the scope of the invention unless otherwise specifically indicated.

### EXAMPLES

### EXAMPLE 1

The polyester is dispersed at 30% solids in water. The polyester is prepared from 82 mole % isophthalic acid, 18 mole % 5-(sodiosulfo)isophthalic acid, 54 mole % diethylene glycol, and 46 mole % cyclohexanedimethanol. It has a Tg of 55°C and an I.V. of 0.33 in a 60/40 phenol/tetrachloroethane mixture. The water resistance (Table 1) of this material when coated onto aluminum foil is given a rating of 1 which indicates total removal of the coating.

### EXAMPLE 2

A mixture of 266.67 g of the aqueous 30% solids water-dispersible polyester dispersion described in Example 1 and 413.40 g additional water is heated with stirring to 80°C. A feed consisting of 294.40 g styrene and 25.60 g butyl acrylate with 1.00 g benzoyl peroxide as the initiator is added via an FMI lab metering pump over about a 4 hour period. Heating is continued for an additional 3 hours. The material has an I.V. of 0.707 with a Tg of 94°C. The water resistance (Table 1) of this material when coated onto aluminum foil is given a rating of 5 which indicates no removal of the coating.

### EXAMPLE 3

A mixture of 533.33 g of the 30% solids water-dispersible polyester dispersion described in Example 1 and 226.67 g water is heated to 80°C with stirring. Next a feed containing 220.80 g styrene, 19.20 g butyl acrylate, and 1.00 g benzoyl peroxide is added over about a 4 hour period. The I.V. of the product is 0.787 with a Tg of 50°C. The water resistance of this sample is rated a 5.

### EXAMPLE 4

A mixture of 133.33 g of the 30% solids water-dispersible polyester dispersion described in Example 1 and 506.67 g water is heated to 80°C with stirring. Styrene (288.00 g), butyl acrylate (72.00 g), and benzoyl peroxide (1.00 g) is added over a period of about 4 hours. The material has an I.V. of 0.522 with a Tg of 61°C. The water resistance of the sample on aluminum foil is rated at a 4 which indicates only smearing of the coating with no removal.

### EXAMPLE 5

A mixture of 266.67 g of the 30% solids water-dispersible polyester dispersion described in Example 1 and 413.33 g water is heated to 80°C with stirring. Styrene (256.00 g), butyl acrylate (64.00 g), and benzoyl peroxide (1.00 g) are added over a period of about 4 hours. The product has an I.V. of 0.827 with a Tg of 58°C. The water resistance of this material on aluminum foil is rated a 5.

### EXAMPLE 6

A mixture of water-dispersible polyester and water as described in Example 2 is heated to 80°C with stirring. A feed containing styrene (192.00 g), butyl acrylate (48.00 g), and benzoyl peroxide (1.00 g) is added over about a 4 hour period. The sample has an I.V. of 0.624 with a Tg of 69°C. The water resistance of this sample is rated a 4.

### EXAMPLE 7

A mixture of water-dispersible polyester and water as described in Example 4 is heated to 80°C with stirring. Styrene (185.60 g), butyl acrylate (134.40 g), and benzoyl peroxide (1.00 g) are added over about a 4 hour period. The product has an I.V. of 1.054 with a Tg of 39°C. The water resistance of this material is rated a 4.

### EXAMPLE 8

A mixture of water-dispersible polyester and water as described in Example 2 is heated to 80°C with stirring. Styrene (139.20 g), butyl acrylate (100.80 g), and benzoyl peroxide (1.00 g) are added over about a 4 hour period. The material has an I.V. of 0.800 with a Tg of 50°C. The water resistance of this material is rated a 3 which means the coating smeared with slight removal.

### EXAMPLE 9

A mixture of 266.67 g of the 30% solids water-dispersible polyester dispersion described in Example 1, 393.33 g water, and 20.00 g n-propanol is heated to 80°C with stirring. Styrene (256.00 g), butyl acrylate (64.00 g), and benzoyl peroxide (1.00 g) are added over about a 4 hour period. The sample has an I.V. of 0.786 with a Tg of 75°C.

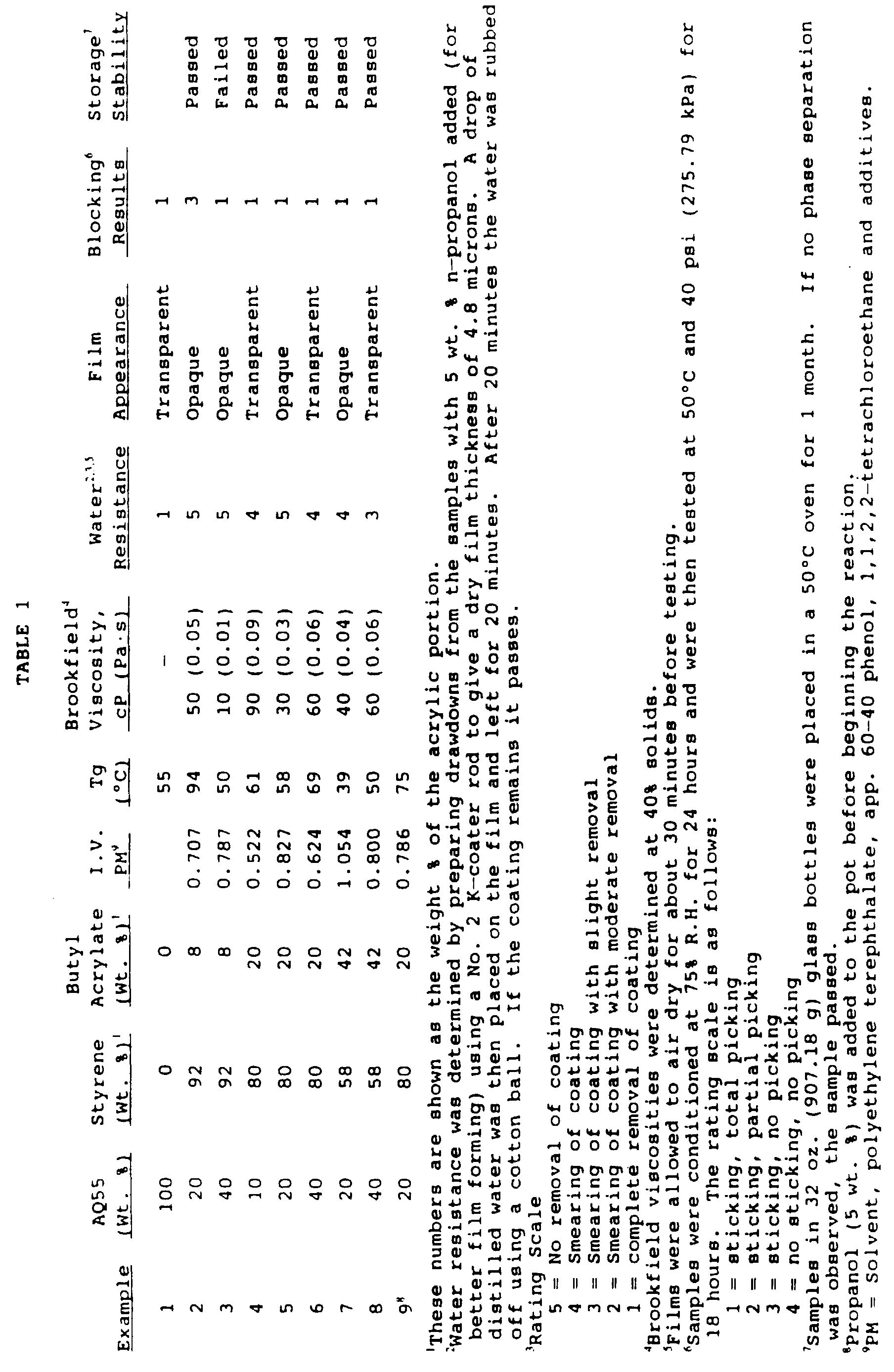

### EXAMPLE 10

An emulsion is formed from 1580 g of a 33.22% dispersion of the water dispersible polyester described in Step 1, 2162 g of distilled water and 2100 g of styrene stabilized with 10-15 ppm of t-butylcatechol. A 12-liter round bottom reactor equipped with a bottom-scraping mechanical stirrer and temperature controller is charged with 1135 g of the emulsion, 400 g of distilled water, 4.5 g of sodium carbonate and 942 g of a 33.22% dispersion of water dispersible polyester described in Step 1. Potassium persulfate (11.4 g) is dissolved in 368 g of water, and 184 g of this solution is added to the reactor. Nitrogen is bubbled through the mixture for 15 minutes. The mixture is heated to 70°C. After the initial exotherm, the remaining emulsion is pumped into the reactor with a metering pump over 3 hours, the remaining catalyst solution is pumped into the reactor over 3.5 hours and 3798 g of a 33.22% dispersion of water dispersible polyester described in Step 1 is added over 3 hours. The reaction temperature is kept above 70°C during the addition of reactants. The temperature is increased to 80°C after all of the emulsion is added, and the reaction is kept at this temperature for 2 hours. The product is a milky white liquid, 37.0% non-volatiles, Ph = 5.3, viscosity = 31 cps (0.031 Pa·s) (#2 Brookfield spindle, 25°C, 60 rpm), particle size = 44 nm in 0.01 M sodium chloride. The non-volatiles consist of 50% of the water dispersible polyester and 50% of the polymerized styrene, by formulation. The dried residue has an I.V. of 0.448 and a glass transition (Tg) temperature of 53°C and 106°C (two transitions). Water resistance is determined by adding 5% by weight of n-propanol and 5% of a 40% suspension of a blue pigment (Blue 15:3). "Drawdowns" are prepared using a #2 K-coater rod on aluminum foil; the aluminum is not cleaned or pre-treated. After drying overnight at room temperature, a drop of water is placed on the ink film. After 20 minutes, the drop is rubbed off using a tissue and a weight that exerts 2 psi (13.79 kPa) pressure. The extent of removal of the ink is judged according to the scale described in Table 1. The water dispersible polyester described in Example 1 has a water resistance rating of 1. The sample prepared in this example has a water resistance of 1. Blocking temperature is determined on a Sentinel heat sealer. The blocking temperature is the temperature of the jaws required to get two printed surfaces to stick together after 5 seconds at an effective jaw pressure of 40 psi (275.80 kPa). The 60° gloss is 44% and the minimum film forming temperature is 18°C.

### EXAMPLE 11

In a reaction similar to Example 10, a pre-emulsion is made from 807 g of water, 861 g of 33.22% water dispersible polyester, and 1144 g of styrene. A 5-liter reactor is charged with 454 g of the emulsion, 202 g of distilled water, 1.8 g of sodium carbonate and 478 g of the 33.22% dispersion of water dispersible polyester. 4.5 g of potassium persulfate is dissolved in 91 g of water, and 45 g of this solution is added to the reactor. After the initial exotherm, the remaining emulsion is added over 2.5 hours, and the remaining catalyst solution is added over 3 hours. One hour after the pumping of the emulsion is started, 478 g of the 33.22% dispersion of water dispersible polyester is added, and 478 g is added after two hours. The reaction is then cooked at 80°C for 2 hours. The product contains 41.9% non-volatiles, pH = 5.4, viscosity = 121 cps (0.121 Pa·s), particle size = 55 nm. The non-volatiles consist of 40% water dispersible polyester and 60% of polymerized styrene by formulation. The dried residue has an I.V. of 0.519 and Tg of 51 and 102. The water resistance rating is 4, and the 60° gloss is 39%.

### EXAMPLE 12

In a reaction similar to Example 10, an emulsion is prepared from 1092 g of water, 1021 g of a 32.69% water dispersible polyester described in Example 1, and 1335 g of styrene. A 5-liter reactor is charged with 908 g of the emulsion, 318 g of water, 1.8 g of ammonium persulfate, 3.0 g of sodium bicarbonate and 243 g of the 32.69% polyester dispersion. After the initial exotherm, the remaining emulsion is added over 2.5 hours. A solution of 2.7 g of ammonium persulfate in 45 g of water is pumped in, starting at the same time, over 3 hours. The 32.69% polyester dispersion (253 g) is added after 1 hour, and 233 g is added after two hours. The product has 41.9% non-volatiles, pH = 5.28, viscosity = 38 cps (0.038 Pa·s), particle size = 119 nm. The non-volatiles consist of 30% water dispersible polyester and 70% of polymerized styrene, by formulation. The I.V. of the dried residue is 0.555 and the Tg is 49°C and 109°C. The water resistance rating is 5, the 60° gloss is 33%, the blocking temperature is 140°F (60°C) and the minimum film forming temperature is greater than 33°C.

### EXAMPLE 13

Example 12 is repeated but with the addition of 1.4 g of dodecylmercaptan, a chain transfer agent, to the emulsion. The I.V. of the product is 0.459, the water resistance is 5, the blocking temperature is 140°F (60°C) and the particle size is 117 nm.

### EXAMPLE 14

Example 12 is repeated but with the replacement of 399 g of the styrene in the emulsion with an equal amount of alpha methyl styrene. The I.V. of the product is 0.406, the water resistance is 4, the 60° gloss is 43% and the blocking temperature is 120°F (48.89°C).

### EXAMPLE 15

In a reaction similar to Example 10, an emulsion is made from 1013 g of water, 1.8 g of sodium carbonate, 1367 g of a 33.22% dispersion of the polyester described in Example 1, and 1816 g of styrene. A catalyst solution is made from 4.5 g of potassium persulfate and 191 g of water. A reactor is charged with 300 g of this emulsion, 153 g water, and 98 g of the catalyst solution. The remainder of the emulsion is added over 2.5 hours. The product contains 49.4% non-volatiles, pH = 6.12, viscosity = 1940 cps (1.940 Pa·s), particle size = 167 nm. The non-volatiles consist of 20% by weight of the water dispersible polyester and 80% polymerized styrene, by formulation. The dried residue has an I.V. of 0.740, and Tg's of 48°C and 108°C. The water resistance of an ink film prepared from this latex is 4, the blocking temperature is 140°F (60°C) and the 60° gloss is 38%.

### EXAMPLE 16

Following the general method of Example 10, a 1-liter flask equipped with a mechanical stirrer and automatic temperature controller is charged with 271 g of distilled water, 0.3 g of ammonium persulfate, 0.6 g of sodium bicarbonate and 181 g of a 33.22% water dispersion of the polyester described in Example 1. The contents of the reactor are heated to 70°C. A mixture of 195 g of ethyl acrylate and 41 g of styrene is pumped in over 1.5 hours. A mixture of 0.4 g of ammonium persulfate in 7 g of water and a mixture of 0.3 g of sodium metabisulfite in 7 g of water are pumped in over 2 hours. Once the styrene-ethyl acrylate mixture is added, 0.7 g of t-butylhydroperoxide is added and the temperature is raised to 80°C for an additional two hours. The product contains 42.3% non-volatiles, pH = 5.9, viscosity = 12 cps (0.012 Pa·s). The non-volatiles consist of 20% by weight of dispersible polyester, 13.8% of polymerized styrene and 66.2% of polymerized ethyl acrylate, by formulation. The dried residue has an I.V. of 1.757 and a Tg of 47°C. The water resistance rating is 5, the blocking temperature is less than 100°F (37.78°C), the 60° gloss is 34%. The printed samples have such a low block temperature that they adhere to each other at room temperature with mild hand pressure.

### EXAMPLE 17

A 1-liter reactor is charged with 18.2 g of styrene, 4.5 g of ethyl acrylate, 170.3 g of a 32.5% dispersion of polyester as described in Example 1, 0.5 g of ammonium persulfate, 0.5 g of sodium bicarbonate and 285.7 g of water. The reactor is heated to 60°C and a mixture of 161.1 g of styrene and 41.4 g of ethyl acrylate is pumped in over 74 minutes. During the reaction, a mixture of 0.5 g of ammonium persulfate in 10 g of water and 0.4 g of sodium metabisulfite in 10 g of water is added. The reaction is heated at 60°C for a total of 210 minutes. The product contains 38.84% non-volatiles, pH = 6.86, viscosity = 18 cps (0.018 Pa·s). The non-volatiles consist of 20% by weight of water dispersible polyester, 64% of polymerized styrene and 16% of polymerized ethyl acrylate, by formulation. The dried residue has an I.V. of 1.418 and a Tg of 83°C. The water resistance rating is 4 and the blocking temperature is 140°F (60°C).

### EXAMPLE 18

An emulsion is made from 130 g of n-propanol, 256 g of water, 99 g of ethyl acrylate, 494 g of styrene and 1313 g of a 30.1% aqueous dispersion of a polyester similar to the one described in Example 1, but consisting of, nominally, 89 mole % isophthalic acid, 11% sodium 5-sulfoisophthalic acid, and the diol component is diethylene glycol. A 3-liter reactor is charged with 520 g of this emulsion, 256 g of water, 1 g of ammonium persulfate and 2 g of sodium bicarbonate. The contents are heated to 60°C and, after the initial exotherm subsides, the remaining emulsion is pumped in over 2 hours. Simultaneously, a mixture of 1.6 g of ammonium persulfate in 26 of water and 1.0 g of sodium metabisulfite in 26 g of water is pumped in over 2 hours. When the addition of the emulsion is complete, 2.6 g of t-butylhydroperoxide (70%) is added and the mixture is heated for an additional 2 hours at 80°C. The milky white product has 38.35% non-volatiles, pH = 6.1, viscosity = 19 cps (0.019 Pa·s), and a particle size of 75 nm. The non-volatiles consist of 40% of the water dispersible polyester, 50% of polystyrene and 10% of ethyl acrylate, by formulation. The dried residue has an I.V. of 0.936, and a Tg of 87°C. The water resistance rating on aluminum foil is 1 and the blocking temperature is 120°F (48.89°C).

### EXAMPLE 19

A polymerization essentially similar to Example 18 is made, with the substitution of a similar amount of an aqueous dispersion of a polyester that consists of 89 mole percent isophthalic acid, 11% sodium 5-sulfoisophthalic acid, 78% diethylene glycol and 22% cyclohexane dimethanol. The product has 36.93% non-volatiles, pH = 4.8, viscosity = 19 cps (0.019 Pa·s), and a particle size of 82 nm. The non-volatiles consist of 40% of the water dispersible polyester, 50% of polystyrene and 10% of ethyl acrylate, by formulation. The dried residue has an I.V. of 1.159 and a Tg of 84°C. The water resistance rating on aluminum foil is 3 and the blocking temperature is 130°F (54.44°C).

### EXAMPLE 20

A mixture of 407 g of water, 1.8 g of ammonium persulfate, 1.8 g of sodium bicarbonate, 3646 g of a 32.69% dispersion of the polyester described in Example 1, and 397 g of styrene is heated for 2 hours at 72°C in a 5-liter reactor. The product has 35.91% non-volatiles, pH = 5.7, viscosity = 145 cps (0.145 Pa·s), and a particle size of 27 nm. The non-volatiles consist of 75% by weight of polyester and 25% polystyrene, by formulation. The dried residue has an I.V. of 0.414 and a Tg of 49°C. The water resistance rating on aluminum foil is 1, and the blocking temperature is 120°F (48.89°C).

### EXAMPLE 21

The following example illustrates the monomodal nature of the particle size distribution of polymer blends made in accordance with the method of the present invention.

Figure 1 is the particle size distribution of a mixture of 3 parts by weight of the polyester described in Example 1 with 1 part by weight of a common commercial latex rich in polystyrene. The polyester, by itself, has a size of 26 nm and the polystyrene latex, 110 nm. The mixture consists of particles with both of these sizes. The intensity of the polyester peak is lower than that of the polystyrene because light scattering intensity decreases sharply with size.

Figure 2 is of the composition described in Example 20. Only one range of particle size is observed. The homogeneity in size suggests to us that the particles are homogeneous in composition as well. All compositions described herein have monodisperse particle sizes, which is to say substantially all of the particles have a size centered around one value, even when the particle size is significantly different from that of the polyester in Example 1.

The invention has been described in detail with particular reference to preferred embodiments thereof, but it will be understood that variations and modifications can be effected within the spirit and scope of the invention.

## Claims

1. A polymer blend having a monomodal particle size distribution obtainable by polymerizing in aqueous dispersion one or more monomers wherein said monomers comprise 30 to 100 weight % of at least one styrene monomer (B)(a) and up to 70 weight % of at least one (meth)acrylate monomer (B)(b) in the presence of a dispersion of polyester or polyesteramide and wherein said polymer blend is comprising:
(A) 5 to 75 weight % of a water-dispersible sulfonate group-containing polyester or polyesteramide,
(B) 25 to 95 weight % of a polymer from said monomers.

2. The polymer blend of Claim 1 wherein component (A) is present in an amount of 15 to 50 weight %, component (B) is present in an amount of 50 to 85 weight %; and component (B) comprises 50 to 100 weight % of component (B)(a) and 0 to 50 weight % of component (B)(b).

3. The polymer blend of Claim 2 wherein component (A) is present in an amount of 20 to 40 weight %, component (B) is present in an amount of 60 to 80 weight %; and component (B) comprises 70 to 100 weight % of component (B)(a) and 0 to 30 weight % of component (B)(b).

4. The polymer blend of Claim 1 wherein said water-dispersible polyester or polyesteramide comprises a polymer having carbonyloxy linking groups in the linear molecular structure wherein up to 80% of the linking groups are carbonylamido linking groups, the polymer having an inherent viscosity of from 0.1 to 1.0 measured in a 60/40 parts by weight solution of phenol/tetrachloroethane at 25°C and at a concentration of 0.5 gram of polymer in 100 mL of the solvent, the polymer containing substantially equimolar proportions of acid equivalents (100 mole %) to hydroxy and amino equivalents (100 mole %), the polymer comprising the reaction products of reactants seiected from (a), (b), and (c), or the ester forming or esteramide forming derivatives thereof, as follows, wherein all stated mole percentages are based on the total of all acid, hydroxyl, and amino equivalents being equal to 200 mole %,
(a) at least one difunctional aromatic, saturated aliphatic or saturated alicyclic dicarboxylic acid;
(b) from 2 to 25 mole %, based on a total of all acid, hydroxyl and amino equivalents being equal to 200 mole %, of at least one difunctional sulfomonomer containing at least one metal sulfonate group attached to an aromatic nucleus wherein the functional groups are hydroxy, carboxyl or amino; and
(c) at least one glycol or a mixture of a glycol and a diamine having two -NRH groups, the glycol containing two -CH₂-OH groups, wherein R is a hydrogen atom or an alkyl group of 1 to 4 carbon atoms.

5. The polymer blend of Claim 1 wherein said water-dispersible polyester or polyesteramide comprises a polymer having carbonyloxy linking groups in the linear molecular structure wherein up to 80% of the linking groups are carbonylamido linking groups, the polymer having an inherent viscosity of from 0.1 to 1.0 measured in a 60/40 parts by weight solution of phenol/tetrachloroethane at 25°C and at a concentration of 0.5 gram of polymer in 100 mL of the solvent, the polymer containing substantially equimolar proportions of acid equivalents (100 mole %) to hydroxy and amino equivalents (100 mole %), the polymer comprising the reaction products of reactants selected from (a), (b), (c), and (d), or the ester forming or esteramide forming derivatives thereof, as follows, wherein all stated mole percentages are based on the total of all acid, hydroxyl, and amino equivalents being equal to 200 mole %:
(a) at least one difunctional dicarboxylic acid;
(b) from 4 to 25 mole % of at least one difunctional sulfomonomer containing at least one metallic sulfonate group or nitrogen-containing nonmetallic sulfonate group attached to an aromatic or cycloaliphatic nucleus wherein the functional groups are hydroxy, carboxyl, or amino;
(c) at least one difunctional reactant selected from a glycol or a mixture of a glycol and diamine having two -NRH groups, the glycol containing two -CH₂-OH groups of which
(1) at least 15 mole % is a poly(ethylene glycol) having the structural formula
H(̵OCH₂-CH₂)̵ₙOH,
n being an integer of from 2 to 20, or
(2) of which from 0.1 to less than 15 mole % is a poly(ethylene glycol) having the structural formula
H(̵OCH₂-CH₂)̵ₙOH,
n being an integer of between 2 and 500, and with the proviso that the mole % of said poly(ethylene glycol) within said range is inversely proportional to the quantity of n within said range; and
(d) from none to 40 mole % of difunctional reactant selected from hydroxycarboxylic acids having one -C(R)₂-OH group, aminocarboxylic acids having one -NRH group, amino-alcohols having one -C(R)₂-OH group and one -NRH group, or mixtures of said difunctional reactants;
wherein each R in the (c) and (d) reactants is a hydrogen atom or an alkyl group of 1 to 4 carbons;
said styrene compound is of the structure 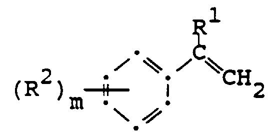 wherein R¹ is H or methyl, R² is a lower alkyl group of 1 to 6 carbon atoms, and m is an integer of 0 to 2; and
said (meth)acrylate compound is of the structure 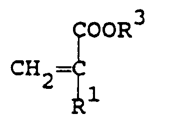 wherein R³ is H or an alkyl group of 1 to 10 carbon atoms, optionally substituted with one or two substituents selected from the group consisting of hydroxy, acetoacetoxy, C₁-C₆ alkoxy, epoxy and halogen, and R¹ has the same meaning as previously defined.

6. The polymer blend of Claim 5 wherein said water-dispersible polyester has an inherent viscosity of from 0.28 to 0.38, an acid moiety of from 75 to 84 mole % isophthalic acid and conversely from 25 to 16 mole % 5-sodiosulfoisophthalic acid, and a glycol moiety of from 45 to 60 mole % diethylene glycol and conversely from 55 to 40 mole % 1,4-cyclohexanedimethanol or ethylene glycol or mixtures thereof.

7. The polymer blend of Claim 6 wherein said acid moiety comprises from 80 to 83 mole % isophthalic acid and conversely from 20 to 17 mole % 5-sodiosulfoisophthalic acid, and said glycol moiety comprises from 52 to 56 mole % diethylene glycol and conversely from 48 to 44 mole % 1,4-cyclohexanedimethanol.

8. The polymer blend of Claim 1 wherein said styrene compound is selected from the group consisting of styrene, α-methyl styrene, 4-methyl styrene, and 3-methyl styrene, t-butyl styrene and mixtures thereof and said (meth)acrylate compound is selected from the group consisting of butyl acrylate, ethyl acrylate, propyl acrylate, 2-ethylhexyl acrylate, methyl methacrylate, and mixtures thereof.

9. An aqueous dispersion comprising water and the polymer blend of Claim 1.

10. The aqueous dispersion of Claim 9 containing up to 5 weight % of a C₁ to C₄ alcohol.

11. A method of preparing a water-dispersed polymer blend of claim 1 comprising the steps of:
(i) preparing an aqueous polymerization mixture by contacting
(A) a water-dispersible sulfonate group-containing polyester or polyesteramide,
(B) one or more monomers, wherein said monomers comprise:
(a) 30 to 100 weight % of a styrene monomer, and
(b) up to 70 weight % of repeating units from a (meth)acrylate monomer,
(C) a polymerization initiator, and
(D) water,
(ii) polymerizing said monomers to provide said water-dispersible polymer blend.

12. The method of Claim 11 wherein component (A) is present in an amount of 1 to 45 weight %, component (B) is present in an amount of 5 to 57 weight %, component (C) is present in an amount of 0.01 to 2 weight %, and component (D) is present in an amount of 40 to 80 weight %.

13. The method of Claim 11 wherein component (A) is present in an amount of 3 to 30 weight %, component (B) is present in an amount of 10 to 51 weight %, component (C) is present in an amount of 0.03 to 0.5 weight %, component (D) is present in an amount of 40 to 80 weight %, and said polymerization mixture further comprises up to 10 weight % of a C₁ to C₄ alcohol.

14. The method of Claim 11 wherein component (A) is present in an amount of 7 to 20 weight %, component (B) is present in an amount of 21 to 40 weight %, component (C) is present in an amount of 0.05 to 0.2 weight %, and component (D) is present in an amount of 50 to 65 weight %, and said polymerization mixture further comprises up to 5 weight % of propanol.

15. The method of Claim 11 wherein said water-dispersible polyester or polyesteramide comprises repeat units from
(a) at least one difunctional aromatic, saturated aliphatic or saturated alicyclic dicarboxylic acid;
(b) from 2 to 25 mole %, based on a total of all acid, hydroxyl and amino equivalents being equal to 200 mole %, of at least one difunctional sulfomonomer containing at least one metal sulfonate group attached to an aromatic nucleus wherein the functional groups are hydroxy, carboxyl or amino; and
(c) at least one glycol or a mixture of a glycol and a diamine having two -NRH groups, the glycol containing two -CH₂-OH groups, wherein R is a hydrogen atom or an alkyl group of 1 to 4 carbon atoms.

16. The method of Claim 11 wherein said water-dispersible polyester or polyesteramide comprises a polymer having carbonyloxy linking groups in the linear molecular structure wherein up to 80% of the linking groups are carbonylamido linking groups, the polymer having an inherent viscosity of from 0.1 to 1.0 measured in a 60/40 parts by weight solution of phenol/tetrachloroethane at 25°C and at a concentration of 0.5 gram of polymer in 100 mL of the solvent, the polymer containing substantially equimolar proportions of acid equivalents (100 mole %) to hydroxy and amino equivalents (100 mole %), the polymer comprising the reaction products of reactants selected from (a), (b), (c), and (d), or the ester forming or esteramide forming derivatives thereof, as follows, wherein all stated mole percentages are based on the total of all acid, hydroxyl, and amino equivalents being equal to 200 mole %:
(a) at least one difunctional dicarboxylic acid;
(b) from 4 to 25 mole % of at least one difunctional sulfomonomer containing at least one metallic sulfonate group or nitrogen-containing nonmetallic sulfonate group attached to an aromatic or cycloaliphatic nucleus wherein the functional groups are hydroxy, carboxyl, or amino;
(c) at least one difunctional reactant selected from a glycol or a mixture of a glycol and diamine having two -NRH groups, the glycol containing two -CH₂-OH groups of which
(1) at least 15 mole % is a poly(ethylene glycol) having the structural formula
H(̵OCH₂-CH₂)̵ₙOH,
n being an integer of from 2 to 20, or
(2) of which from 0.1 to less than 15 mole % is a poly(ethylene glycol) having the structural formula
H(̵OCH₂-CH₂)̵ₙOH,
n being an integer of between 2 and 500, and with the proviso that the mole % of said poly(ethylene glycol) within said range is inversely proportional to the quantity of n within said range; and
(d) from none to 40 mole % of difunctional reactant selected from hydroxycarboxylic acids having one -C(R)₂-OH group, aminocarboxylic acids having one -NRH group, amino-alcohols having one -C(R)₂-OH group and one -NRH group, or mixtures of said difunctional reactants;
wherein each R in the (c) and (d) reactants is a hydrogen atom or an alkyl group of 1 to 4 carbons;
said styrene compound is of the structure 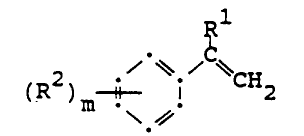 wherein R¹ is H or methyl, R² is a lower alkyl group of 1 to 6 carbon atoms, and m is an integer of 0 to 2; and
said (meth)acrylic compound is of the structure 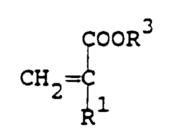 wherein R³ is H or an alkyl group of 1 to 10 carbon atoms, optionally substituted with one or two substituents selected from the group consisting of hydroxy, epoxy, C₁-C₆ alkoxy, acetoacetoxy, and halogen, and R¹ has the same meaning as previously defined.

17. The method of Claim 11 wherein said water-dispersible polyester has an inherent viscosity of from 0.28 to 0.38, an acid moiety of from 75 to 84 mole % isophthalic acid and conversely from 25 to 16 mole % 5-sodiosulfoisophthalic acid, and a glycol moiety of from 45 to 60 mole % diethylene glycol and conversely from 55 to 40 mole % 1,4-cyclohexanedimethanol or ethylene glycol or mixtures thereof.

18. The method of Claim 11 wherein said styrene compound is selected from the group consisting of styrene, α-methyl styrene, 4-methyl styrene, and mixtures thereof and said (meth)acrylic compound is selected from the group consisting of methyl methacrylate, butyl acrylate, ethyl acrylate, propyl acrylate, 2-ethylhexyl acrylate, hydroxyethyl methacrylate, glycidyl (meth)acrylate, acetoacetoxyethyl methacrylate, and mixtures thereof.

19. An ink composition comprising
(I) 5 to 60 weight % of the polymer blend of claim 1 comprising:
(A) 5 to 75 weight % of a water-dispersible sulfonate group-containing polyester or polyesteramide,
(B) 25 to 95 weight % of a styrene polymer comprising:
(a) 30 to 100 weight % of repeating units from a styrene compound, and
(b) up to 70 weight % of repeating units from a (meth)acrylate compound,
(II) up to 30 weight % of a pigment material,
(III) 40 to 90 weight % of water, and
(IV) 0 to 20 weight % of an alcohol.

20. The ink composition of Claim 19 wherein said water dispersible polyester or polyesteramide of component (I)(A) comprises a polymer having carbonyloxy linking groups in the linear molecular structure wherein up to 80% of the linking groups are carbonylamido linking groups, the polymer having an inherent viscosity of from 0.1 to 1.0 measured in a 60/40 parts by weight solution of phenol/tetrachloroethane at 25°C and at a concentration of 0.5 gram of polymer in 100 mL of the solvent, the polymer containing substantially equimolar proportions of acid equivalents (100 mole %) to hydroxy and amino equivalents (100 mole %), the polymer comprising the reaction products of reactants selected from (a), (b), (c), and (d), or the ester forming or esteramide forming derivatives thereof, as follows, wherein all stated mole percentages are based on the total of all acid, hydroxyl, and amino equivalents being equal to 200 mole %:
(a) at least one difunctional dicarboxylic acid;
(b) from 4 to 25 mole % of at least one difunctional sulfomonomer containing at least one metallic sulfonate group or nitrogen-containing nonmetallic sulfonate group attached to an aromatic or cycloaliphatic nucleus wherein the functional groups are hydroxy, carboxyl, or amino;
(c) at least one difunctional reactant selected from a glycol or a mixture of a glycol and diamine having two -NRH groups, the glycol containing two -CH₂-OH groups of which
(1) at least 15 mole % is a poly(ethylene glycol) having the structural formula
H(̵OCH₂-CH₂)̵ₙOH,
n being an integer of from 2 to 20, or
(2) of which from 0.1 to less than 15 mole % is a poly(ethylene glycol) having the structural formula
H(̵OCH₂-CH₂)̵ₙOH,
n being an integer of between 2 and 500, and with the proviso that the mole % of said poly(ethylene glycol) within said range is inversely proportional to the quantity of n within said range; and
(d) from none to 40 mole % of difunctional reactant selected from hydroxycarboxylic acids having one -C(R)₂-OH group, aminocarboxylic acids having one -NRH group, amino-alcohols having one -C(R)₂-OH group and one -NRH group, or mixtures of said difunctional reactants;
wherein each R in the (c) and (d) reactants is a hydrogen atom or an alkyl group of 1 to 4 carbons;
said styrene compound is of the structure 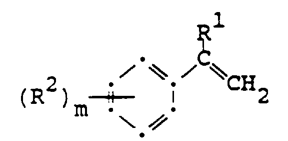 wherein R¹ is H or methyl, R² is a lower alkyl group of 1 to 6 carbon atoms, and m is an integer of 0 to 2; and
said (meth)acrylic compound is of the structure 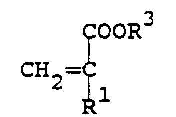 wherein R³ is H or an alkyl group of 1 to 10 carbon atoms, optionally substituted with one or two substituents selected from the group consisting of hydroxy, C₁-C₆ alkoxy, epoxy, acetoacetoxy and halogen, and R¹ has the same meaning as previously defined.

## Patentansprüche

1. Polymerblend mit einer monomodalen Teilchengrößenverteilung, erhältlich durch Polymerisierung in wäßriger Dispersion von einem oder mehreren Monomeren, worin die Monomeren 30 bis 100 Gew.-% mindestens eines Styrenmonomers (B)(a) und bis zu 70 Gew.-% mindestens eines (Meth)acrylatmonomers (B)(b) in Gegenwart einer Polyester- oder Polyesteramiddispersion umfassen und worin der Polymerblend umfaßt:
(A) 5 bis 75 Gew.-% eines in Wasser dispergierbaren, Sulfonatgruppen enthaltenden Polyesters oder Polyesteramids,
(B) 25 bis 95 Gew.-% eines Polymers aus den genannten Monomeren.

2. Polymerblend nach Anspruch 1, worin Bestandteil (A) in einer Menge von 15 bis 50 Gew.-% vorhanden ist, Bestandteil (B) ist vorhanden in einer Menge von 50 bis 85 Gew.-% und Bestandteil (B) umfaßt 50 bis 100 Gew.-% Bestandteil (B) (a) und 0 bis 50 Gew.-% Bestandteil (B)(b).

3. Polymerblend nach Anspruch 2, worin Bestandteil (A) in einer Menge von 20 bis 40 Gew.-% vorhanden ist, Bestandteil (B) ist in einer Menge von 60 bis 80 Gew.-% vorhanden und Bestandteil (B) umfaßt 70 bis 100 Gew.-% Bestandteil (B)(a) und 0 bis 30 Gew.-% Bestandteil (B)(b).

4. Polymerblend nach Anspruch 1, worin der in Wasser dispergierbare Polyester oder das in Wasser dispergierbare Polyesteramid ein Polymer umfaßt mit einer Carbonyloxy-Verknüpfungsgruppe in der linearen Molekularstruktur, wobei bis zu 80 % der Verknüpfungsgruppen Carbonylamido-Verknüpfungsgruppen sind, das Polymer hat eine inhärente Viskosität von 0,1 bis 1,0, gemessen in einer 60/40-Gewichtsteile-Lösung aus Phenol/Tetrachlorethan bei 25°C und bei einer Konzentration von 0,5 g Polymer in 100 ml des Lösemittels, das Polymer enthält im wesentlichen äquimolare Anteile der Säureäquivalente (100 Mol-%) zu Hydroxy- und Aminoäquivalenten (100 Mol-%); das Polymer umfaßt die Reaktionsprodukte der Reaktanten, ausgewählt aus (a), (b), und (c) oder Ester bildenden oder Esteramid bildenden Derivaten davon, wie folgt, wobei alle angegebenen Molprozentsätze sich auf die Gesamtheit aller Säure-, Hydroxyl- und Amino-Äquivalente bezieht, die gleich 200 Mol-% sind,
(a) mindestens eine difunktionale aromatische, gesättigte aliphatische oder gesättigte alicyclische Dicarbonsäure,
(b) von 2 bis 25 Mol-%, bezogen auf die Gesamtheit aller Säure-, Hydroxyl- und Amino-Äquivalente, die gleich 200 Mol-% ist, mindestens eines difunktionalen Sulfomonomers, das mindestens eine metallische Sulfonatgruppe, gebunden an einen aromatischen Kern, enthält, wobei die funktionalen Gruppen Hydroxy, Carboxyl oder Amino sind, und
(c) mindestens ein Glykol oder eine Mischung aus einem Glykol und einem Diamin mit zwei -NRH-Gruppen, wobei das Glykol zwei -CH₂-OH-Gruppen enthält, wobei R ein Wasserstoffatom oder eine Alkylgruppe mit 1 bis 4 Kohlenstoffatomen ist.

5. Polymerblend nach Anspruch 1, worin der in Wasser dispergierbare Polyester oder das in Wasser dispergierbare Polyesteramid ein Polymer mit einer Carbonyloxy-Verknüpfungsgruppe in der linearen Molekularstruktur aufweist, worin bis zu 80 % der Verknüpfungsgruppen Carbonylamido-Verknüpfungsgruppen sind; das Polymer hat eine inhärente Viskosität von 0,1 bis 1,0, gemessen in einer 60/40 Gewichtsteile-Lösung aus Phenol/Tetrachlorethan bei 25°C und bei einer Konzentration von 0,5 g Polymer in 100 ml Lösemittel; das Polymer enthält im wesentlichen äquimolare Anteile der Säureäquivalente (100 Mol-%) zu Hydroxy- und Amino-Äquivalenten (100 Mol-%); das Polymer umfaßt die Reaktionsprodukte der Reaktanten, ausgewählt aus (a), (b), (c) und (d) oder den Ester bildenden oder Esteramid bildenden Derivaten davon, wie folgt, wobei alle angegebenen Molprozentsätze sich auf die Gesamtheit aller Säure-, Hydroxyl- und Amino-Äquivalente bezieht, die gleich 200 Mol-% sind:
(a) mindestens eine difunktionale Dicarbonsäure,
(b) von 4 bis 25 Mol-% mindestens eines difunktionalen Sulfomonomers, das mindestens eine metallische Sulfonatgruppe oder Stickstoff enthaltende nichtmetallische Sulfonatgruppe, gebunden an einen aromatischen oder cycloaliphatischen Kern, enthält, worin die funktionalen Gruppen Hydroxy, Carboxyl oder Amino sind,
(c) mindestens ein difunktionaler Reaktant, ausgewählt aus einem Glykol oder einer Mischung aus einem Glykol und einem Diamin mit zwei -NRH-Gruppen, das Glykol enthält zwei -CH₂-OH-Gruppen, von denen
(1) mindestens 15 Mol-% ein Polyethylen mit der folgenden Strukturformel ist
H(̵OCH₂-CH₂)̵ₙOH,
n ist eine ganze Zahl von 2 bis 20, oder
(2) wovon von 0,1 bis weniger als 15 Mol-% ein Polyethylenglykol mit der folgenden Strukturformel ist
H(̵CH₂CH₂)̵ₙOH,
n ist eine ganze Zahl zwischen 2 und 500 mit der Maßgabe, daß der Molprozentsatz des Polyethylenglykols innerhalb des angegebenen Bereichs umgekehrt proportional zu der Quantität n in dem Bereich ist, und
(d) von 0 bis 40 Mol-% eines difunktionalen Reaktanten, ausgewählt aus Hydroxycarbonsäuren mit einer -C(R)₂-OH-Gruppe, Aminocarbonsäuren mit einer -NRH-Gruppe, Aminoalkoholen mit einer -C(R)₂-OH-Gruppe und einer -NRH-Gruppe, oder Mischungen der difunktionalen Reaktanten,
wobei jedes R in den Reaktanten (c) und (d) ein Wasserstoffatom oder eine Alkylgruppe mit 1 bis 4 Kohlenstoffatomen ist,
die Styrenverbindung hat die folgende Struktur 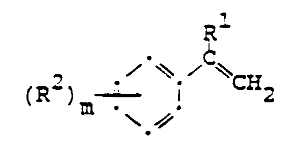 worin R¹ ein H oder Methyl ist, R² ist eine Niederalkylgruppe mit 1 bis 6 Kohlenstoffatomen und m ist eine ganze Zahl von 0 bis 2, und
die (Meth)acrylat-Verbindung hat die folgende Struktur 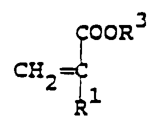 worin R³ ein H oder eine Alkylgruppe mit 1 bis 10 Kohlenstoffatomen ist, gegebenenfalls substituiert mit einem oder zwei Substituenten, ausgewählt aus der Gruppe, bestehend aus Hydroxy, Acetoacetoxy, C₁-C₆-Alkoxy, Epoxy und Halogen, und R¹ hat die gleiche Bedeutung wie zuvor angegeben.

6. Polymerblend nach Anspruch 5, worin der in Wasser dispergierbare Polyester eine inhärente Viskosität von 0,28 bis 0,38 hat, einen Säureanteil aus 75 bis 84 Mol-% Isophthalsäure und umgekehrt von 25 bis 16 Mol-% 5-Natriumsulfoisophthalsäure und einen Glykolanteil aus 45 bis 60 Mol-% Diethylenglykol und umgekehrt 55 bis 40 Mol-% 1,4-Cyclohexandimethanol oder Ethylenglykol oder Mischungen davon.

7. Polymerblend nach Anspruch 6, worin der Säureanteil von 80 bis 83 Mol-% Isophthalsäure und umgekehrt von 20 bis 17 Mol-% 5-Natriumsulfoisophthalsäure umfaßt und der Glykolanteil umfaßt 52 bis 56 Mol-% Diethylenglykol und umgekehrt von 48 bis 44 Mol-% 1,4-Cyclohexandimethanol.

8. Polymerblend nach Anspruch 1, worin die Styrenverbindung ausgewählt ist aus der Gruppe, bestehend aus: Styren, α-Methylstyren, 4-Methylstyren und 3-Methylstyren, t-Butylstyren und Mischungen davon und die (Meth)acrylatverbindung ist ausgewählt aus der Gruppe, bestehend aus: Butylacrylat, Ethylacrylat, Propylacrylat, 2-Ethylhexylacrylat, Methylmethacrylat und Mischungen davon.

9. Wäßrige Dispersion, umfassend Wasser und den Polymerblend nach Anspruch 1.

10. Wäßrige Dispersion nach Anspruch 9, enthaltend bis zu 5 Gew.-% eines C₁-C₄-Alkohols.

11. Verfahren zur Herstellung eines in Wasser dispergierten Polymerblend nach Anspruch 1, umfassend die Schritte:
(i) Herstellung einer wäßrigen Polymerisierungsmischung durch Inkontaktbringen von
(A) einem in Wasser dispergierbaren, Sulfonatgruppen enthaltenden Polyester oder Polyesteramid,
(B) einem oder mehreren Monomeren, wobei die Monomere umfassen:
(a) 30 bis 100 Gew.-% eines Styrenmonomer und
(b) bis zu 70 Gew.-% wiederkehrende Einheiten aus (Meth)acrylatmonomer,
(C) einem Polymerisierungsinitiator und
(D) Wasser,
(ii) Polymerisieren der Monomere, um den in Wasser dispergierbaren Polymerblend zu erhalten.

12. Verfahren nach Anspruch 11, worin der Bestandteil (A) in einer Menge von 1 bis 45 Gew.-% vorhanden ist, Bestandteil (B) ist in einer Menge von 5 bis 57 Gew.-% vorhanden, Bestandteil (C) ist in einer Menge von 0,01 bis 2 Gew.-% vorhanden und Bestandteil (D) ist in einer Menge von 40 bis 80 Gew.-% vorhanden.

13. Verfahren nach Anspruch 11, worin der Bestandteil (A) in einer Menge von 3 bis 30 Gew.-% vorhanden ist, Bestandteil (B) ist in einer Menge von 10 bis 51 Gew.-% vorhanden, Bestandteil (C) ist in einer Menge von 0,03 bis 0,5 Gew.-% vorhanden, Bestandteil (D) ist in einer Menge von 40 bis 80 Gew.-% vorhanden und die Polymerisierungsmischung umfaßt darüberhinaus 10 Gew.-% eines C₁-C₄-Alkohols.

14. Verfahren nach Anspruch 11, worin der Bestandteil (A) in einer Menge von 7 bis 20 Gew.-% vorhanden ist, Bestandteil (B) ist in einer Menge von 21 bis 40 Gew.-% vorhanden, Bestandteil (C) ist in einer Menge von 0,05 bis 0,2 Gew.-% vorhanden und Bestandteil (D) ist in einer Menge von 50 bis 65 Gew.-% vorhanden, und die Polymerisierungsmischung umfaßt darüberhinaus bis zu 5 Gew.-% Propanol.

15. Verfahren nach Anspruch 11, worin der in Wasser dispergierbare Polyester oder das in Wasser dispergierbare Polyesteramid folgende wiederkehrende Einheiten umfaßt
(a) mindestens eine difunktionale aromatische, gesättigte aliphatische oder gesättigte alicyclische Dicarbonsäure,
(b) von 2 bis 25 Mol-%, bezogen auf die Gesamtheit aller Säure-, Hydroxy- und Amino-Äquivalente, die gleich 200 Mol-% sind, mindestens eines difunktionalen Sulfomonomers, das mindestens eine metallische Sulfonatgruppe, gebunden an einen aromatischen Kern, enthält, worin die funktionalen Gruppen Hydroxy, Carboxyl oder Amino sind, und
(c) mindestens ein Glykol einer Mischung aus einem Glykol und einem Diamin mit zwei -NRH-Gruppen; das Glykol enthält zwei -CH₂-OH-Gruppen, worin R ein Wasserstoffatom oder eine Alkylgruppe mit 1 bis 4 Kohlenstoffatomen ist.

16. Verfahren nach Anspruch 11, worin der in Wasser dispergierbare Polyester oder das in Wasser dispergierbare Polyesteramid ein Polymer umfassen mit einer Carbonyloxy-Verknüpfungsgruppe in der linearen Molekularstruktur, worin bis zu 80 % der verknüpfenden Gruppen Carbonylamido-Verknüpfungsgruppen sind; das Polymer hat eine inhärente Viskosität von 0,1 bis 1,0, gemessen in einer 60/40 Gewichtsteile-Lösung aus Phenol/Tetrachlorethan bei 25°C und einer Konzentration von 0,5 g Polymer in 100 ml Lösemittel; das Polymer enthält im wesentlichen äquimolare Anteile der Säureäquivalente (100 Mol-%) zu Hydroxy- und Amino-Äquivalenten (100 Mol-%), das Polymer umfaßt die Reaktionsprodukte der Reaktanten, ausgewählt aus (a), (b), (c) und (d), oder Ester bildende oder Esteramid bildende Derivate davon, wie folgt, wobei alle angegebenen Molprozentsätze sich auf die Gesamtheit aller Säure-, Hydroxyl- und Amino-Äquivalente bezieht, die gleich 200 Mol-% sind:
(a) mindestens eine difunktionale Dicarbonsäure,
(b) von 4 bis 25 Mol-% mindestens eines difunktionalen Sulfomonomers, das mindestens eine metallische Sulfonatgruppe oder Stickstoff enthaltende nichtmetallische Sulfonatgruppe, gebunden an einen aromatischen oder cycloaliphatischen Kern, enthält, worin die funktionalen Gruppen Hydroxy, Carboxyl oder Amino sind,
(c) mindestens ein difunktionaler Reaktant, ausgewählt aus einem Glykol oder einer Mischung aus einem Glykol und einem Diamin mit zwei -NRH-Gruppen; das Glykol enthält zwei -CH₂-OH-Gruppen, wovon
(1) mindestens 15 Mol-% ein Polyethylenglykol ist mit der folgenden Strukturformel
H(̵OCH₂-CH₂)̵ₙOH,
n ist eine ganze Zahl von 2 bis 20, oder
(2) von 0,1 bis weniger als 15 Mol-% ein Polyethylenglykol mit der folgenden Strukturformel ist
H(̵OCH₂-CH₂)̵ₙOH,
n ist eine ganze Zahl zwischen 2 und 500 mit der Maßgabe, daß der Molprozentsatz des Polyethylenglykols in dem angegebenen Bereich umgekehrt proportional zu der Quantität n innerhalb des angegebenen Bereiches ist, und
(d) von 0 bis 40 Mol-% difunktionaler Reaktant, ausgewählt aus Hydroxycarbonsäuren mit einer -C(R)₂-OH-Gruppe, Aminocarbonsäuren mit einer -NRH-Gruppe, Aminoalkohole mit einer -C(R)₂-OH-Gruppe und einer -NRH-Gruppe, oder Mischungen der difunktionalen Reaktanten,
worin R jeweils in den Reaktatnen (c) und (d) ein Wasserstoffatom oder eine Alkylgruppe mit 1 bis 4 Kohlenstoffatomen ist,
die Styrolverbindung hat die folgende Struktur 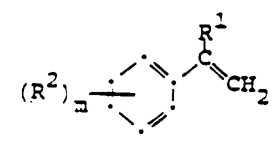 worin R¹ ein H ist oder ein Methyl, R² ist eine Niederalkylgruppe mit 1 bis 6 Kohlenstoffatomen und m ist eine ganze Zahl von 0 bis 2, und
die (Meth)acrylverbindung hat die folgende Struktur 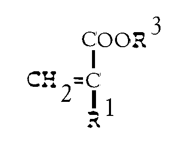 worin R³ ein H ist oder eine Alkylgruppe mit 1 bis 10 Kohlenstoffatomen, gegebenenfalls substituiert mit einer oder zwei Substituenten, ausgewählt aus der Gruppe, bestehend aus Hydroxy, Epoxy, C₁-C₆-Alkoxy, Acetoacetoxy und Halogen, und R¹ hat die gleiche Bedeutung, wie zuvor definiert.

17. Verfahren nach Anspruch 11, worin der in Wasser dispergierbare Polyester eine inhärente Viskosität von 0,28 bis 0,38 hat, einen Säureanteil von 75 bis 84 Mol-% Isophthalsäure und umgekehrt von 25 bis 16 Mol-% 5-Natriumsulfoisophthalsäure und einen Glykolanteil von 45 bis 60 Mol-% Diethylenglykol und umgekehrt von 55 bis 40 Mol-% 1,4-Cyclohexandimethanol oder Ethylenglykol oder Mischungen davon.

18. Verfahren nach Anspruch 11, worin die Styrenverbindung ausgewählt ist aus der Gruppe, bestehend aus: Styren, α-Methylstyren, 4-Methylstyren und Mischungen davon; und die (Meth)acrylverbindung ist ausgewählt aus der Gruppe, bestehend aus: Methylacrylat, Butylacrylat, Ethylacrylyat, Propylacrylat, 2-Ethylhexylacrylat, Hydroxyethylmethacrylat, Glycidyl(meth)acrylat, Acetoacetoxyethylmethacrylat und Mischungen davon.

19. Tintenzusammensetzung umfassend
(I) 5 bis 60 Gew.-% des Polymerblends nach Anspruch 1, umfassend:
(A) 5 bis 75 Gew.-% eines in Wasser dispergierbaren, Sulfonatgruppen enthaltenden Polyesters oder Polyesteramids,
(B) 25 bis 95 Gew.-% eines Styrenpolymers, umfassend:
(a) 30 bis 100 Gew.-% wiederkehrender Eiheiten einer Styrenverbindung, und
(b) bis zu 70 Gew.-% wiederkehrender Einheiten einer (Meth)acrylatverbindung,
(II) bis zu 30 Gew.-% eines Pigmentmaterials,
(III) 40 bis 90 Gew.-% Wasser und
(IV) 0 bis 20 Gew.-% eines Alkohols.

20. Tintenzusammensetzung nach Anspruch 19, worin der in Wasser dispergierbare Polyester oder das in Wasser dispergierbare Polyesteramid von Bestandteil (I)(A) ein Polymer mit Carbonyloxy-Verknüpfungsgruppen in der linearen Molekularstruktur umfaßt, worin bis zu 80 % der Verknüpfungsgruppen Carbonylamido-Verknüpfungsgruppen sind; das Polymer hat eine inhärente Viskosität von 0,1 bis 1,0, gemessen in einer 60/40 Gewichtsteile-Lösung aus Phenol/ Tetrachlorethan bei 25°C und bei einer Konzentration von 0,5 g Polymer in 100 ml Lösemittel; das Polymer enthält im wesentlichen äquimolare Anteile der Säureäquivalente (100 Mol-%) zu Hydroxy- und Aminoäquivalenten (100 Mol-%); das Polymer umfaßt die Reaktionsprodukte der Reaktanten, ausgewählt aus (a), (b), (c) und (d) oder Ester bildende oder Esteramid bildende Derivate davon, wie folgt, wobei alle angegebenen Molprozentsätze sich auf die Gesamtheit aller Säure-, Hydroxyl- und Aminoäquivalente bezieht, die gleich 200 Mol-% sind:
(a) mindestens eine difunktionale Dicarbonsäure,
(b) von 4 bis 25 Mol-% mindestens eines difunktionalen Sulfomonomers, das mindestens eine metallische Sulfonatgruppe oder Stickstoff enthaltende nichtmetallische Sulfonatgruppe, gebunden an einen aromatischen oder cycloaliphatischen Kern, enthält, worin die funktionalen Gruppen Hydroxy, Carboxyl oder Amino sind,
(c) mindestens ein difunktionaler Reaktant, ausgewählt aus einem Glykol oder einer Mischung aus einem Glykol und einem Diamin mit zwei -NRH-Gruppen, das Glykol enthält zwei -CH₂-OH-Gruppen, wovon
(1) mindestens 15 Mol-% ein Polyethylenglykol mit der folgenden Strukturformel
H(̵OCH₂-CH₂)̵ₙOH,
n ist eine ganze Zahl von 2 bis 20, oder
(2) von 0,1 bis weniger als 15 Mol-% ein Polyethylenglykol mit der folgenden Strukturformel ist
H(̵OCH₂-CH₂)̵ₙOH,
n ist eine ganze Zahl zwischen 2 und 500 mit der Maßgabe, daß der Molprozentsatz des Polyethylenglykols in dem angegebenen Bereich umgekehrt proportional zu der Quantität n innerhalb des angegebenen Bereiches sind, und
(d) von 0 bis 40 Mol-% difunktionaler Reaktant, ausgewählt aus Hydroxycarbonsäuren mit einer -C(R)₂-OH-Gruppe, Aminocarbonsäuren mit einer -NRH-Gruppe, Aminoalkoholen mit einer -C(R)₂-OH-Gruppe und einer -NRH-Gruppe, oder Mischungen der difunktionalen Reaktanten,
worin R jeweils in den Reaktanten (c) und (d) ein Wasserstoffatom oder eine Alkylgruppe mit 1 bis 4 Kohlenstoffatomen ist,
die Styrolverbindung hat die folgende Struktur 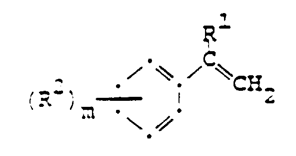 worin R¹ ein H ist oder ein Methyl, R² ist eine Niederalkylgruppe mit 1 bis 6 Kohlenstoffatomen und m ist eine ganze Zahl von 0 bis 2, und
die (Meth)Acrylatverbindung hat die folgende Struktur
worin R³ ein H ist oder eine Alkylgruppe mit 1 bis 10 Kohlenstoffatomen, gegebenenfalls substituiert mit einer oder zwei Substituenten, ausgewählt aus der Gruppe, bestehend aus Hydroxy, Epoxy, C₁-C₆-Alkoxy, Acetoacetoxy und Halogen, und R¹ hat die gleiche Bedeutung, wie zuvor definiert.

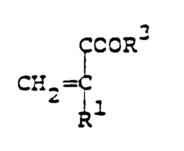

## Revendications

1. Mélange polymère ayant une distribution de granulométrie monomodale que l'on peut obtenir en polymérisant en dispersion aqueuse un ou plusieurs monomères, lesdits monomères comprenant de 30 à 100 % en poids d'au moins un styrène monomère (B)(a) et jusqu'à 70 % en poids d'au moins un (méth)acrylate monomère (B)(b) en présence d'une dispersion de polyester ou de polyesteramide, et ledit mélange polymère comprenant :
(A) de 5 à 75 % en poids d'un polyester ou d'un polyesteramide contenant un groupe sulfonate dispersible dans l'eau,
(B) de 25 à 95 % en poids d'un polymère desdits monomères.

2. Mélange polymère selon la revendication 1, dans lequel le composant (A) est présent en une quantité comprise entre 15 et 50 % en poids, le composant (B) est présent en une quantité comprise entre 50 et 85 % en poids, et le composant (B) comprend de 50 à 100 % en poids de composant (B)(a) et de 0 à 50 % en poids de composant (B)(b).

3. Mélange polymère selon la revendication 2, dans lequel le composant (A) est présent en une quantité comprise entre 20 et 40 % en poids, le composant (B) est présent en une quantité comprise entre 60 et 80 % en poids, et le composant (B) comprend de 70 à 100 % en poids de composant (B)(a) et de 0 à 30 % en poids de composant (B)(b).

4. Mélange polymère selon la revendication 1, dans lequel ledit polyester ou polyesteramide dispersible dans l'eau comprend un polymère ayant des groupes de liaison carbonyloxy dans la structure moléculaire linéaire, dans lesquels jusqu'à 80 % des groupes de liaison sont des groupes de liaison carbonylamido, le polymère ayant une viscosité intrinsèque comprise ente 0,1 et 1,0 telle que mesurée dans une solution de 60/40 parties en poids de phénol/tétrachloroéthane à 25°C et à une concentration de 0,5 g de polymère dans 100 ml du solvant, le polymère contenant des proportions pratiquement équimolaires d'équivalents acides (100 % en moles) par rapport aux équivalents hydroxy et amino (100 % en moles), le polymère comprenant les produits de la réaction de réactifs choisis parmi (a), (b), (c) et (d), ou leurs dérivés formant un ester ou formant un esteramide, comme cela est indiqué ci-après où tous les pourcentages en moles se basent sur le total de tous les équivalents acides hydroxyle et amino, qui est égal à 200 % en moles :
(a) au moins un acide dicarboxylique alicyclique saturé, aliphatique saturé ou aromatique difonctionnel ;
(b) de 2 à 25 % en moles, par rapport au total de tous les équivalents acide, hydroxyle et amino qui est égal à 200 % en moles, d'au moins un composé sulfo monomère difonctionnel contenant au moins un groupe sulfonate métallique attaché à un cycle aromatique, les groupes fonctionnels étant des groupes hydroxy, carboxyle ou amino ; et
(c) au moins un glycol ou un mélange d'un glycol et d'une diamine ayant deux groupes -NRH, le glycol contenant deux groupes -CH₂-OH, et R étant un atome d'hydrogène ou un groupe alkyle ayant de 1 à 4 atomes de carbone.

5. Mélange polymère selon la revendication 1, dans lequel ledit polyester ou polyesteramide dispersible dans l'eau comprend un polymère ayant des groupes de liaison carbonyloxy dans la structure moléculaire linéaire, dans lesquels jusqu'à 80 % des groupes de liaison sont des groupes de liaison carbonylamido, le polymère ayant une viscosité intrinsèque comprise ente 0,1 et 1,0 telle que mesurée dans une solution de 60/40 parties en poids de phénol/tétrachloroéthane à 25°C et à une concentration de 0,5 g de polymère dans 100 ml du solvant, le polymère contenant des proportions pratiquement équimolaires d'équivalents acides (100 % en moles) par rapport aux équivalents hydroxy et amino (100 % en moles), le polymère comprenant les produits de la réaction de réactifs choisis parmi (a) , (b), (c) et (d) , ou leurs dérivés formant un ester ou formant un esteramide, comme cela est indiqué ci-après où tous les pourcentages en moles se basent sur le total de tous les équivalents acides hydroxyle et amino, qui est égal à 200 % en moles :
(a) au moins un acide dicarboxylique difonctionnel ;
(b) de 4 à 25 % en moles d'au moins un composé sulfo monomère difonctionnel contenant au moins un groupe sulfonate métallique ou un groupe sulfonate non métallique azoté attaché à un cycle aromatique ou cycloaliphatique, les groupes fonctionnels étant des groupes hydroxy, carboxyle ou amino ;
(c) au moins un réactif difonctionnel choisi parmi un glycol ou un mélange d'un glycol et d'une diamine ayant deux groupes -NRH, le glycol contenant deux groupes -CH₂-OH dont
(1) au moins 15 % sont constitués d'un polyéthylèneglycol de formule structurelle H-(OCH₂-CH₂)ₙ-OH où n est un entier compris entre 2 et 20, ou
(2) environ 0,1 à moins de 15 % en moles sont constitués d'un polyéthylèneglycol de formule structurelle H-(OCH₂-CH₂)ₙ-OH où n est un entier compris entre 2 et 500,
et du moment que le pourcentage en moles dudit polyéthylèneglycol à l'intérieur dudit intervalle est inversement proportionnel à la valeur de n à l'intérieur dudit intervalle ; et
(d) de 0 à 40 % en moles d'un réactif difonctionnel choisi parmi les acides hydroxycarboxyliques ayant un groupe -C(R)₂-OH, les acides aminocarboxyliques ayant un groupe -NRH, les aminoalcools ayant un groupe -C(R)₂-OH et un groupe -NRH, ou de mélanges desdits réactifs difonctionnels ;
chaque R dans les réactifs (c) et (d) étant un atome d'hydrogène ou un groupe alkyle ayant de 1 à 4 atomes de carbone ;
ledit composé styrène ayant la structure suivante : 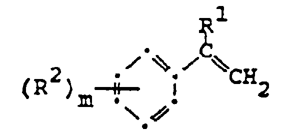 dans laquelle R¹ est l'hydrogène ou un radical méthyle, R² est un groupe alkyle inférieur ayant de 1 à 6 atomes de carbone, et m est un entier compris entre 0 et 2 ;
ledit composé (méth)acrylate ayant la structure suivante : 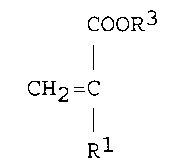 dans laquelle R³ est l'hydrogène ou un groupe alkyle ayant de 1 à 10 atomes de carbone, éventuellement substitué par un ou deux substituants choisis dans l'ensemble constitué par les atomes d'halogène et les groupes hydroxy, acétoacétoxy, alcoxy en C₁ à C₆ et époxy et R¹ a la même signification que celle indiquée ci-dessus.

6. Mélange polymère selon la revendication 1, dans lequel ledit polyester dispersible dans l'eau a une viscosité intrinsèque comprise entre 0,28 et 0,38, une partie acide constituée de 75 à 84 % en moles d'acide isophtalique et inversement de 25 à 16 % en moles d'acide 5-sodiosulfoisophtalique, et une partie glycol constituée de 45 à 60 % en moles de diéthylèneglycol et inversement de 55 à 40 % en moles de 1,4-cyclohexdanediméthanol, d'éthylèneglycol ou d'un de leurs mélanges.

7. Mélange polymère selon la revendication 6, dans lequel ladite partie acide est constituée de 80 à 83 % en moles d'acide isophtalique et inversement de 20 à 17 % en moles d'acide 5-sodiosulfoisophtalique, et ladite partie glycol est constituée de 52 à 56 % en moles de diéthylèneglycol et inversement de 48 à 44 % en moles de 1,4-cyclohexanediméthanol.

8. Mélange polymère selon la revendication 1, dans lequel ledit composé styrène est choisi dans l'ensemble constitué par le styrène, l'α-méthylstyrène, le 4-méthylstyrène, le 3-méthylstyrène, le tert-butylstyrène et leurs mélanges, et ledit composé (méth)acrylate est choisi dans l'ensemble constitué par l'acrylate de butyle, l'acrylate d'éthyle, l'acrylate de propyle, l'acrylate de 2-éthylhexyle, le méthacrylate de méthyle et leurs mélanges.

9. Dispersion aqueuse comprenant de l'eau et le mélange polymère de la revendication 1.

10. Dispersion aqueuse selon la revendication 9, contenant jusqu'à 5 % en poids d'un alcool en C₁ à C₄.

11. Procédé pour préparer un mélange polymère dispersible dans l'eau selon la revendication 1, comprenant les étapes consistant à :
(i) préparer un mélange de polymérisation aqueux par mise en contact
(A) d'un polyester ou polyesteramide contenant un groupe sulfonate dispersible dans l'eau,
(B) d'un ou plusieurs monomères, lesdits monomères comprenant :
(a) de 30 à 100 % en poids d'un styrène monomère, et
(b) jusqu'à 70 % en poids de motifs répétitifs d'un (méth)acrylate monomère,
(C) d'un amorceur de polymérisation, et
(D) d'eau,
(ii) polymériser lesdits monomères pour obtenir ledit mélange polymère dispersible dans l'eau.

12. Procédé selon la revendication 11, dans lequel le composant (A) est présent en une quantité comprise entre 1 et 45 % en poids, le composant (B) est présent en une quantité comprise entre 5 et 57 % en poids, le composant (C) est présent en une quantité comprise entre 0,01 et 2 % en poids, et le composant (D) est présent en une quantité comprise entre 40 et 80 % en poids.

13. Procédé selon la revendication 11, dans lequel le composant (A) est présent en une quantité comprise entre 3 et 30 % en poids, le composant (B) est présent en une quantité comprise entre 10 et 51 % en poids, le composant (C) est présent en une quantité comprise entre 0,03 et 0,5 % en poids, le composant (D) est présent en une quantité comprise entre 40 et 80 % en poids, et ledit mélange de polymérisation comprend en outre jusqu'à 10 % en poids d'un alcool en C₁ à C₄.

14. Procédé selon la revendication 11, dans lequel le composant (A) est présent en une quantité comprise entre 7 et 20 % en poids, le composant (B) est présent en une quantité comprise entre 21 et 40 % en poids, le composant (C) est présent en une quantité comprise entre 0,05 et 0,2 % en poids, le composant (D) est présent en une quantité comprise entre 50 et 65 % en poids, et ledit mélange de polymérisation comprend en outre jusqu'à 5 % en poids de propanol.

15. Procédé selon la revendication 11, dans lequel ledit polyester ou polyester amide dispersible dans l'eau comprend des motifs répétitifs de :
(a) au moins un acide dicarboxylique alicyclique saturé, aliphatique saturé ou aromatique difonctionnel ;
(b) de 2 à 25 % en moles, par rapport au total de tous les équivalents acide, hydroxyle et amino qui est égal à 200 % en moles, d'au moins un composé sulfo monomère difonctionnel contenant au moins un groupe sulfonate métallique attaché à un cycle aromatique, les groupes fonctionnels étant des groupes hydroxy, carboxyle ou amino ; et
(c) au moins un glycol ou un mélange d'un glycol et d'une diamine ayant deux groupes -NRH, le glycol contenant deux groupes -CH₂-OH, et R étant un atome d'hydrogène ou un groupe alkyle ayant de 1 à 4 atomes de carbone.

16. Procédé selon la revendication 11, dans lequel ledit polyester ou polyesteramide dispersible dans l'eau comprend un polymère ayant des groupes de liaison carbonyloxy dans la structure moléculaire linéaire, dans lesquels jusqu'à 80 % des groupes de liaison sont des groupes de liaison carbonylamido, le polymère ayant une viscosité intrinsèque comprise ente 0,1 et 1,0 telle que mesurée dans une solution de 60/40 parties en poids de phénol/tétrachloroéthane à 25°C et à une concentration de 0,5 g de polymère dans 100 ml du solvant, le polymère contenant des proportions pratiquement équimolaires d'équivalents acides (100 % en moles) par rapport aux équivalents hydroxy et amino (100 % en moles), le polymère comprenant les produits de la réaction de réactifs choisis parmi (a), (b), (c) et (d), ou leurs dérivés formant un ester ou formant un esteramide, comme cela est indiqué ci-après où tous les pourcentages en moles se basent sur le total de tous les équivalents acides hydroxyle et amino, qui est égal à 200 % en moles :
(a) au moins un acide dicarboxylique difonctionnel ;
(b) de 4 à 25 % en moles d'au moins un composé sulfo monomère difonctionnel contenant au moins un groupe sulfonate métallique ou un groupe sulfonate non métallique azoté attaché à un cycle aromatique ou cycloaliphatique, les groupes fonctionnels étant des groupes hydroxy, carboxyle ou amino ;
(c) au moins un réactif difonctionnel choisi parmi un glycol ou un mélange d'un glycol et d'une diamine ayant deux groupes -NRH, le glycol contenant deux groupes -CH₂-OH dont
(1) au moins 15 % sont constitués d'un polyéthylèneglycol de formule structurelle H-(OCH₂-CH₂)ₙ-OH où n est un entier compris entre 2 et 20, ou
(2) environ 0,1 à moins de 15 % en moles sont constitués d'un polyéthylèneglycol de formule structurelle H-(OCH₂-CH₂)ₙ-OH où n est un entier compris entre 2 et 500,
et du moment que le pourcentage en moles dudit polyéthylèneglycol à l'intérieur dudit intervalle est inversement proportionnel à la valeur de n à l'intérieur dudit intervalle ; et
(d) de 0 à 40 % en moles d'un réactif difonctionnel choisi parmi les acides hydroxycarboxyliques ayant un groupe -C(R)₂-OH, les acides aminocarboxyliques ayant un groupe -NRH, les aminoalcools ayant un groupe -C(R)₂-OH et un groupe -NRH, ou de mélanges desdits réactifs difonctionnels ;
chaque R dans les réactifs (c) et (d) étant un atome d'hydrogène ou un groupe alkyle ayant de 1 à 4 atomes de carbone ;
ledit composé styrène ayant la structure suivante : 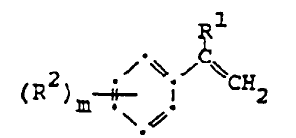 dans laquelle R¹ est l'hydrogène ou un radical méthyle, R² est un groupe alkyle inférieur ayant de 1 à 6 atomes de carbone, et m est un entier compris entre 0 et 2 ; et
ledit composé (méth)acrylate ayant la structure suivante : 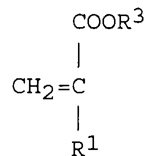 dans laquelle R³ est l'hydrogène ou un groupe alkyle ayant de 1 à 10 atomes de carbone, éventuellement substitué par un ou deux substituants choisis dans l'ensemble constitué par les atomes d'halogène et les groupes hydroxy, acétoacétoxy, alcoxy en C₁ à C₆ et époxy et R¹ a la même signification que celle indiquée ci-dessus.

17. Procédé selon la revendication 11, dans lequel ledit polyester dispersible dans l'eau a une viscosité intrinsèque comprise entre 0,28 et 0,38, une partie acide constituée de 75 à 84 % en moles d'acide isophtalique et inversement de 25 à 16 % en moles d'acide 5-sodiosulfoisophtalique, et une partie glycol constituée de 45 à 60 % en moles de diéthylèneglycol et inversement de 55 à 40 % en moles de 1,4-cyclohexdanediméthanol, d'éthylèneglycol ou d'un de leurs mélanges.

18. Procédé selon la revendication 11, dans lequel ledit composé styrène est choisi dans l'ensemble constitué par le styrène, l'α-méthylstyrène, le 4-méthylstyrène et leurs mélanges, et ledit composé (méth)acrylate est choisi dans l'ensemble constitué par le méthacrylate de méthyle, l'acrylate de butyle, l'acrylate d'éthyle, l'acrylate de propyle, l'acrylate de 2-éthylhexyle, le méthacrylate d'hydroxyéthyle, le (méth)acrylate de glycidyle, le méthacrylate d'acétoacétoxyéthyle et leurs mélanges.

19. Composition d'encre comprenant :
I) de 5 à 60 % en poids du mélange polymère de la revendication 1, comprenant :
(A) de 5 à 75 % en poids d'un polyester ou polyesteramide contenant un groupe sulfonate dispersible dans l'eau,
(B) de 25 à 95 % en poids d'un polymère de styrène comprenant :
(a) de 30 à 100 % en poids de motifs répétitifs d'un composé du styrène, et
(b) jusqu'à 70 % en poids d'au moins un composé (méth)acrylate,
II) de 0 à 30 % en poids d'un matériau de type pigment,
III) de 40 à 90 % en poids d'eau, et
IV) de 0 à 20 % en poids d'un alcool.

20. Composition d'encre selon la revendication 19, dans laquelle ledit polyester ou polyesteramide dispersible dans l'eau du composant (I)(A) comprend un polymère ayant des groupes de liaison carbonyloxy dans la structure moléculaire linéaire, dans lesquels jusqu'à 80 % des groupes de liaison sont des groupes de liaison carbonylamido, le polymère ayant une viscosité intrinsèque comprise ente 0,1 et 1,0 telle que mesurée dans une solution de 60/40 parties en poids de phénol/tétrachloroéthane à 25°C et à une concentration de 0,5 g de polymère dans 100 ml du solvant, le polymère contenant des proportions pratiquement équimolaires d'équivalents acides (100 % en moles) par rapport aux équivalents hydroxy et amino (100 % en moles), le polymère comprenant les produits de la réaction de réactifs choisis parmi (a), (b), (c) et (d), ou leurs dérivés formant un ester ou formant un esteramide, comme cela est indiqué ci-après où tous les pourcentages en moles se basent sur le total de tous les équivalents acides hydroxyle et amino, qui est égal à 200 % en moles :
(a) au moins un acide dicarboxylique difonctionnel ;
(b) de 4 à 25 % en moles d'au moins un composé sulfo monomère difonctionnel contenant au moins un groupe sulfonate métallique ou un groupe sulfonate non métallique azoté attaché à un cycle aromatique ou cycloaliphatique, les groupes fonctionnels étant des groupes hydroxy, carboxyle ou amino ;
(c) au moins un réactif difonctionnel choisi parmi un glycol ou un mélange d'un glycol et d'une diamine ayant deux groupes -NRH, le glycol contenant deux groupes -CH₂-OH dont
(1) au moins 15 % sont constitués d'un polyéthylèneglycol de formule structurelle H-(OCH₂-CH₂)ₙ-OH où n est un entier compris entre 2 et 20, ou
(2) 0,1 à moins de 15 % en moles sont constitués d'un polyéthylèneglycol de formule structurelle H-(OCH₂-CH₂)ₙ-OH où n est un entier compris entre 2 et 500,
et du moment que le pourcentage en moles dudit polyéthylèneglycol à l'intérieur dudit intervalle est inversement proportionnel à la valeur de n à l'intérieur dudit intervalle ; et
(d) de 0 à 40 % en moles d'un réactif difonctionnel choisi parmi les acides hydroxycarboxyliques ayant un groupe -C(R)₂-OH, les acides aminocarboxyliques ayant un groupe -NRH, les aminoalcools ayant un groupe -C(R)₂-OH et un groupe -NRH, ou de mélanges desdits réactifs difonctionnels ;
chaque R dans les réactifs (c) et (d) étant un atome d'hydrogène ou un groupe alkyle ayant de 1 à 4 atomes de carbone ;
ledit composé styrène ayant la structure suivante : 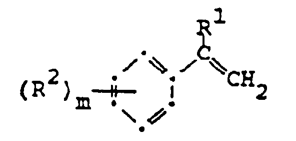 dans laquelle R¹ est l'hydrogène ou un radical méthyle, R² est un groupe alkyle inférieur ayant de 1 à 6 atomes de carbone, et m est un entier compris entre 0 et 2 ; et
ledit composé (méth)acrylate ayant la structure suivante : 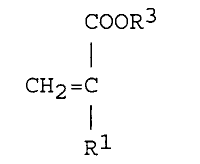 dans laquelle R³ est l'hydrogène ou un groupe alkyle ayant de 1 à 10 atomes de carbone, éventuellement substitué par un ou deux substituants choisis dans l'ensemble constitué par les atomes d'halogène et les groupes hydroxy, alcoxy en C₁ à C₆, époxy et acétoacétoxy, et R¹ a la même signification que celle indiquée ci-dessus.
